# EUROPEAN PATENT APPLICATION

(11) **EP 4 679 668 A1**
(43) Date of publication of application: **14.01.2026**
(21) Application number: 25185859.3
(22) Date of filing: 27.06.2025
(51) Int. Cl.: H02J 7/00, H01M 10/44

(54) **BATTERY CHARGING SYSTEM FOR CHARGING AN ENERGY STORAGE DEVICE BASED ON USAGE INFORMATION**

(30) Priority: 27.06.2024 US 202463664817 P; 26.06.2025 US 202519250714
(71) Applicant: Illinois Tool Works Inc., Glenview IL 60025 (US)
(72) Inventor: IHDE, Jeffery R., Glenview 60025 (US)
(74) Representative: HGF

(57) **Abstract**

A battery charging system comprises power conversion circuitry configured to convert input power to charging power; communications circuitry configured to access usage information from a management system of an energy storage device, the usage information comprising a plurality of charging periods and a plurality of discharging periods of the energy storage device; and control circuitry configured to: predict an available charging period based on the usage information; determine a target state of charge of the energy storage device based on the usage information; determine a charging curve configured to charge the energy storage device to the target state of charge by an end time of the available charging period; and control the power conversion circuitry to charge the energy storage device using the charging curve.

## Description

### RELATED APPLICATIONS

The present application claims the benefit of U.S. Provisional Patent Application Serial No. 63/664,817, filed June 27, 2024, entitled "BATTERY CHARGING SYSTEM FOR CHARGING AN ENERGY STORAGE DEVICE BASED ONUSAGE INFORMATION." The entirety of U.S. Provisional Patent Application Serial No. 63/664,817 is expressly incorporated herein by reference.

### FIELD OF THE DISCLOSURE

This disclosure relates generally to battery charging systems and, more particularly, to battery charging systems and methods for charging one or more energy storage devices based on usage information.

### BACKGROUND

To improve time and energy efficiency, users of batteries or systems utilizing one or more batteries generally desire that a battery be charged when the battery is needed and that a state of health of the batteries be degraded as little as possible and over as long a time period as possible. However, in many contexts (e.g., when used to provide power for a welding system or operation), determining how best to charge and utilize one or more batteries can be difficult, as the timing of usage periods, the duration of usage periods, total energy consumption of usage periods, and other factors are often variable and unscheduled.

### SUMMARY

Battery charging systems and methods for charging one or more energy storage devices based on usage information are disclosed, substantially as illustrated by and described in connection with at least one of the figures, as set forth more completely in the claims.

### BRIEF DESCRIPTION OF THE DRAWINGS

FIG. 1A is a block diagram of an example hybrid welding-type system, in accordance with aspects of this disclosure;
FIG. 1B is a block diagram of an example battery-powered welding-type system, in accordance with aspects of this disclosure;
FIG. 2A depicts a first graph (x-axis: time; y-axis: battery charge percentage) of a first exemplary disuse period, a first exemplary available charging period, and a first exemplary discharging period of an exemplary energy storage device, in accordance with aspects of this disclosure;
FIG. 2B depicts a second graph (x-axis: time; y-axis: battery charge percentage) of a second exemplary disuse period, a second exemplary available charging period, and a second exemplary discharging period of an exemplary energy storage device, in accordance with aspects of this disclosure;
FIG. 3 illustrates an example control circuitry of an example battery charging system, in accordance with aspects of this disclosure; and
FIG. 4 illustrates a flowchart representative of example machine readable instructions which may be executed control circuitry to control the systems of FIGS. 1A and/or 1B.

The figures are not necessarily to scale. Where appropriate, similar or identical reference numbers are used to refer to similar or identical components.

### DETAILED DESCRIPTION

Disclosed example battery charging systems and methods use usage information of one or more energy storage devices to determine a charging schedule for one or more of such energy storage devices. Some disclosed examples determine a charging schedule by predicting an available charging period of an energy storage device, determining a target state of charge of the energy storage device, and determining a charging curve for charging of the energy storage device. Some such disclosed examples use usage information to predict the available charging period and/or to determine the target state of charge. Disclosed battery charging systems and methods may be used in a variety of contexts such as, e.g., for charging one or more energy storage devices for use in hybrid welding-type systems and/or in battery-powered welding-type systems. Using usage information, disclosed examples may reduce energy consumption associated with charging of one or more energy storage devices (and, thereby, noise caused by such energy consumption), extend a lifespan of one or more energy storage devices, reduce downtime caused by unavailability of one or more energy storage devices, and/or improve a uniformity of a state of health ("SoH") of a plurality of energy storage devices.

Examples of disclosed battery charging systems and methods determine a charging curve configured to charge an energy storage device to a target state of charge by an end of an available charging period of the energy storage device. In some examples, using the charging curve in charging of the energy storage device causes the energy storage device to be charged more slowly and/or over a longer period of time than charging conducted by conventional charging systems or methods. By charging an energy storage device more slowly, a power consumption associated with charging of the energy storage device may be reduced compared to power consumption associated with charging at higher charging rates. Charging more slowly may also reduce an amount of noise generated by the charging of an energy storage device may be reduced by reducing a load on a battery charging system charging the energy storage device and, thereby, reducing an amount of noise generated by the battery charging system while charging the energy storage device. Further, charging an energy storage device more slowly generally reduces an effect on SoH of the energy storage device, e.g., due to reduced temperature increases of the energy storage device caused by the charging. Accordingly, disclosed example battery charging systems and methods may extend a lifespan of an energy storage device by reducing an effect on the SoH of the energy storage device caused by charging of the energy storage device by battery charging systems and/or methods disclosed herein.

Examples of disclosed battery charging systems and methods predict an available charging period of an energy storage device, determine a target state of charge of the energy storage device, and determine a charging curve configured to charge the energy storage device to the target state of charge by an end of the available charging period. By charging the energy storage device using the charging curve, the energy storage device may be ready for use (e.g., for a welding operation) by the end of the available charging period (e.g., by storing sufficient energy the welding operation when the energy storage device is needed for the welding operation). Disclosed examples may thereby reduce a downtime associated with a user and/or system waiting for an energy storage device to charge by ensuring that or otherwise increasing the likelihood of the energy storage device having a sufficient state of charge to conduct a welding operation when the energy storage device isn't needed, even if information about the welding operation (e.g., the type of welding operation, estimated power consumption, timing of the welding operation, a duration of the welding operation, etc.) hadn't been provided to the energy storage device. Accordingly, disclosed examples may reduce inefficiencies caused by, e.g., human error, inefficient charging schedules, unplanned welding operations or other uses of one or more energy storage devices, etc.

Examples of disclosed battery charging systems and methods predict an available charging period of an energy storage device based on an availability of one or more alternative energy storage devices. Some such examples use state of health information (e.g., a type of usage information) of each energy storage device of a plurality of available energy storage devices to determine one or more available charging periods of one or more of the available energy storage devices. Disclosed example battery charging systems and methods may, thereby, improve a uniformity of a SoH of the plurality of available energy storage devices by providing available energy storage devices having poorer SoH with longer available charging periods than available charging periods of energy storage devices having better SoH. Accordingly, disclosed example battery charging systems and methods may reduce further degradation of the SoH of the available energy storage devices having poorer SoH.

As used herein, the term "energy storage device" is any device that stores energy, such as, for example, a battery, a super capacitor, etc. The terms "battery" and energy storage device" are used interchangeably herein. Accordingly, it should be understood that usage of the term "battery" in place of the term "energy storage device" should not be construed as being more or less limiting than usage of the term "energy storage device."

As used herein, the term "lifespan," as used to describe an energy storage device, refers to a time period for which an energy storage device is usable for a purpose associated with the energy storage device. For example, a lifespan of an energy storage device may be a time period in which the energy storage device is capable of storing at least a minimum energy threshold and/or is capable of storing an energy amount (e.g., the minimum energy threshold) for a minimum amount of time. In some such examples, such minimum energy thresholds and/or such minimum amounts of time may be dependent on, e.g., a context of use of the energy storage device, qualities of the energy storage device, and/or other factors. In examples, whether or not an energy storage device is "usable" (for the purposes of determining a lifespan of the energy storage device) may be dependent on, e.g., a context of use of the energy storage device, qualities of the energy storage device, and/or other factors.

As used herein, a "bidirectional DC-DC converter" refers to any bidirectional circuit topology that converts voltage up and/or down in a first direction and converts voltage up and/or down in a second direction. Example bidirectional DC-DC converters include buck-boost and/or boost-buck topologies, a SEPIC converter, a Ćuk converter, or the like. For example, a bidirectional DC-DC converter may refer to a DC-DC converter that boosts voltage in one direction and bucks voltage in the opposing direction.

As used herein, the term "recognized battery unit" refers to a battery unit that is approved, authorized, and/or otherwise has identifiable minimum characteristics, such as charge state, nominal voltage, minimum voltage, maximum voltage, and/or charge capacity. Recognition can occur through signaling, measurement, and/or any other mechanism.

As used herein, the term "welding-type power" refers to power suitable for welding, plasma cutting, induction heating, air carbon arc cutting ("CAC-A") and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, the term "processor" means processing devices, apparatus, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC), a graphic processing unit (GPU), a reduced instruction set computer (RISC) processor with an advanced RISC machine (ARM) core, etc. The processor may be coupled to, and/or integrated with a memory storage device.

As utilized herein the terms "circuits," "circuitry," "controller," and "control circuitry" refer to physical electronic components (i.e., hardware) and any software and/or firmware ("code") which may configure the hardware, be executed by the hardware, and/or otherwise be associated with the hardware. As used herein, for example, a "circuit" may comprise any analog and/or digital components, power and/or control elements (such as a microprocessor, digital signal processor (DSP), software, and the like), discrete and/or integrated components, associated software, hardware, and/or firmware, and/or portions and/or combinations thereof. As used herein, for example, a particular processor and memory storage device may comprise a first "circuit" when executing a first set of one or more lines of code and may comprise a second "circuit" when executing a second set of one or more lines of code. As utilized herein, circuitry is "operable" to, "configurable to," and/or "configured to" perform a function whenever the circuitry comprises the necessary hardware and code (if any is necessary) to perform the function, regardless of whether performance of the function is disabled or not enabled (for example, by an operator-configurable setting, factory trim, etc.).

As used herein, the term "communications circuitry" refers to physical electronic components (i.e., hardware) and, in some examples, any software and/or firmware (i.e., code) which may configure the hardware, be executed by the hardware, and/or otherwise enable the hardware to communicate with one or more other devices (e.g., with communications circuitry of such one or more other devices). Communications circuitry may include hardware capable of wired and/or wireless communication with one or more other devices. Hardware capable of wired communication may include, e.g., one or more cables or other optical communication mechanisms, one or more computer buses, and/or one or more additional wired mechanisms for communicating with one or more communications networks and/or one or more devices. Hardware capable of wireless communications may include, e.g., one or more transceivers, one or more antennas, one or more modems, one or more local area network ("LAN") ports, one or more wireless fidelity ("Wi-Fi") cards, one or more WiMax cards, mobile communications hardware, near-field communication hardware, satellite communication hardware, hardware configured to communicate in accordance with one or more wireless communication protocols (e.g., IrDA, Bluetooth, Wireless USB, Z-Wave, ZigBee, radio frequency identification ("RFID"), one or more other near field communications ("NFC") protocols, and/or one or more other protocols for close-proximity and/or wireless communication), and/or other hardware for wirelessly communicating with one or more communications networks and/or one or more devices. Communications circuitry may include one or more network interfaces, one or more input-output ("I/O") interfaces, and/or one or more other interfaces for communicating data (e.g., directly, via one or more communications paths, etc.) to and/or from one or more communications networks. An example network interface may include hardware, firmware, and/or software to communicatively couple communications circuitry to one or more communications networks. A network interface may include and/or be coupled to one or more communication paths. A communication path includes hardware which provides signal interconnectivity between one or more components (e.g., control circuitry and a transceiver). A network interface may include any hardware for transmitting and/or receiving communications (e.g., IEEE 802.X-compliant wireless and/or wired communications hardware). An example I/O interface includes hardware, firmware, and/or software to connect one or more I/O devices to control circuitry (communicatively coupled to, e.g., communications circuitry comprising the I/O interface) for providing input to the control circuitry and/or providing output from the control circuitry. For example, the I/O interface may include a graphics processing unit for interfacing with a display device, a universal serial bus port for interfacing with one or more USB-compliant devices, a FireWire, a field bus, and/or any other type of interface. Example I/O device(s) may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device. Control circuitry communicatively coupled to an I/O interface may access a non-transitory machine-readable medium via the I/O interface and/or one or more I/O device(s). Examples of a machine-readable medium include optical discs (e.g., compact discs (CDs), digital versatile/video discs (DVDs), Bluray discs, etc.), magnetic media (e.g., floppy disks), portable storage media (e.g., portable flash drives, secure digital (SD) cards, etc.), and/or any other type of removable and/or installed machine-readable media.

A "communications network" may include one or more of the Internet, one or more personal area networks ("PAN(s)"), one or more LANs, one or more wide area networks ("WAN(s)"), one or more cellular networks, one or more satellite networks, one or more global positioning systems, one or more other such networks, and/or any combination thereof. A LAN may include, e.g., one or more wired technologies (e.g., Ethernet, USB, etc.) and/or one or more wireless technologies (e.g., Wi-Fi). A PAN may include one or more wired technologies (e.g., USB, FireWire, and/or one or more other computer buses) and/or one or more wireless technologies (e.g., Bluetooth, Wireless USB, IrDA, Z-Wave, ZigBee, RFID, one or more other NFC protocols, and/or one or more other protocols for close-proximity and/or wireless communication). A cellular network may include, e.g., technologies such as LTE, WiMAX, UMTS, CDMA, GSM, 3G, 4G, 5G, 6G, and/or one or more other technologies.

As used, herein, the term "memory," "memory storage device," and/or "memory device" means computer hardware or circuitry to store information for use by a processor and/or other digital device. The memory, memory storage device, and/or memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like. Memory can include, for example, a non-transitory memory, a non-transitory processor readable medium, a non-transitory computer readable medium, non-volatile memory, dynamic RAM (DRAM), volatile memory, ferroelectric RAM (FRAM), first-in-first-out (FIFO) memory, last-in-first-out (LIFO) memory, stack memory, non-volatile RAM (NVRAM), static RAM (SRAM), a cache, a buffer, a semiconductor memory, a magnetic memory, an optical memory, a flash memory, a flash card, a compact flash card, memory cards, secure digital memory cards, a microcard, a minicard, an expansion card, a smart card, a memory stick, a multimedia card, a picture card, flash storage, a subscriber identity module (SIM) card, a hard drive (HDD), a solid state drive (SSD), etc. The memory, memory storage device, and/or memory device can be configured to store code, instructions, applications, software, firmware and/or data, and may be external, internal, or both with respect to a processor.

As used herein, the term "torch" or "welding-type tool" can include a hand-held or robotic welding torch, gun, or other device used to create the welding arc.

As used herein, the term "welding mode" or "welding operation" is the type and/or modality of process and/or output used by a welding system, such as constant current ("CC") welding, constant voltage ("CV") welding, pulse welding, metal inert gas ("MIG") welding or gas metal arc welding ("GMAW"), tungsten inert gas ("TIG") welding or gas tungsten arc welding ("GTAW"), flux cored arc welding ("FCAW"), plasma cutting, spray welding, short circuit transfer welding, etc.

As used herein, the term "boost converter" is a converter used in a circuit that boosts a voltage. For example, a boost converter can be a type of step-up converter, such as a DC-to-DC power converter that steps up voltage while stepping down current from its input (e.g., from an energy storage device) to its output (e.g., a load and/or attached power bus). It is a type of switched mode power supply.

As used herein, the term "buck converter" (e.g., a step-down converter) refers to a power converter which steps down voltage (e.g., while stepping up current) from its input to its output.

Features described herein make reference to the accompanying drawings in which exemplary embodiments of the disclosure are shown. Whenever appropriate, the same reference numerals are used throughout the drawings to refer to the same or like parts. However, it should be understood that the systems of this disclosure can be embodied in many different forms and should not be construed as limited to the embodiments set forth herein.

The term "power" is used throughout this specification, for convenience, to describe hydraulic, mechanical, and electrical power. However, the term "power," as used herein, also includes related measures such as energy, current, voltage, resistance, conductance, and enthalpy. For example, controlling "power" may involve controlling voltage, current, energy, resistance, conductance, and/or enthalpy, and/or controlling based on "power" may involve controlling based on voltage, current, energy, resistance, conductance, and/or enthalpy.

It is to be understood that, as used herein the terms "the," "a," or "an," mean "at least one," and should not be limited to "only one" unless explicitly indicated to the contrary. Thus, for example, reference to "a component" includes embodiments having two or more such components unless the context clearly indicates otherwise.

As used herein, the word "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that any particular order be inferred.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. While various features, elements or steps of particular embodiments can be disclosed using the transitional phrase "comprising," it is to be understood that alternative embodiments, including those that can be described using the transitional phrases "consisting" or "consisting essentially of," are implied. Thus, for example, implied alternative embodiments to an apparatus that comprises A+B+C include embodiments where an apparatus consists of A+B+C and embodiments where an apparatus consists essentially of A+B+C.

Disclosed example battery charging systems comprise: power conversion circuitry configured to convert input power to charging power; communications circuitry configured to access usage information from a management system of an energy storage device, the usage information comprising a plurality of charging periods and a plurality of discharging periods of the energy storage device; and control circuitry configured to: predict an available charging period based on the usage information; determine a target state of charge of the energy storage device based on the usage information; determine a charging curve configured to charge the energy storage device to the target state of charge by an end time of the available charging period; and control the power conversion circuitry to charge the energy storage device using the charging curve.

In some example battery charging systems, the predicting of the available charging period is further based on a plurality of disuse periods of the energy storage device.

In some example battery charging systems, the control circuitry is configured to determine the target state of charge of the energy storage device based on one or more discharging periods of the plurality of discharging periods.

In some such example battery charging systems, the usage information further comprises one or more duty cycles of the energy storage device; each of the one or more duty cycles are associated with one or more discharging periods of the plurality of discharging periods; and the determining of the target state of charge is further based on the one or more duty cycles.

In some example battery charging systems, the control circuitry is configured to determine the target state of charge of the energy storage device based on one or more discharging periods of the plurality of discharging periods; the usage information further comprises one or more average discharge rates of the energy storage device; each of the one or more average discharge rates are associated with one or more discharging periods of the plurality of discharging periods; and the determining of the target state of charge is further based on the one or more average discharge rates.

In some example battery charging systems, the control circuitry is configured to determine the target state of charge of the energy storage device based on one or more discharging periods of the plurality of discharging periods; the usage information further comprises one or more peak discharge rates of the energy storage device; each of the one or more peak discharge rates are associated with one or more discharging periods of the plurality of discharging periods; and the determining of the target state of charge is further based on the one or more peak discharge rates.

In some example battery charging systems, the control circuitry is configured to determine the target state of charge of the energy storage device based on one or more discharging periods of the plurality of discharging periods; the usage information further comprises one or more discharging quantities of the energy storage device; each of the one or more discharging quantities are associated with one or more discharging periods of the plurality of discharging periods; and the determining of the target state of charge is further based on the discharging quantity of the plurality of discharging periods.

In some example battery charging systems, the control circuitry is configured to determine the target state of charge of the energy storage device based on one or more discharging periods of the plurality of discharging periods; the usage information further comprises one or more quantities of total energy discharges of the energy storage device; and the determining of the target state of charge is further based on the one or more total energy discharges.

In some example battery charging systems, the control circuitry is configured to determine the target state of charge of the energy storage device based on one or more discharging periods of the plurality of discharging periods; the usage information further comprises a discharging frequency of the plurality of discharging periods of the energy storage device; and the determining of the target state of charge is further based on the discharging frequency.

In some example battery charging systems, the control circuitry is configured to determine the target state of charge of the energy storage device based on one or more discharging periods of the plurality of discharging periods; the usage information further comprises one or more load characteristics of the energy storage device; each of the one or more load characteristics are associated with one or more discharging periods of the plurality of discharging periods; and the determining of the target state of charge is further based on the one or more load characteristics.

In some example battery charging systems, the control circuitry is further configured to: predict a predicted duration for a subsequent discharge period; and determine the target state of charge based on the predicted duration.

In some example battery charging systems, the control circuitry is further configured to: predict a predicted energy amount for a subsequent discharge period; and determine the target state of charge based on the predicted energy amount.

In some example battery charging systems, the determining of the charging curve comprises selecting the charging curve from a plurality of potential charging curves. In some such example battery charging systems, each potential charging curve of the plurality of potential charging curves is associated with one or more respective durations; and the selecting of the charging curve is based on an available duration of the available charging period.

In some example battery charging systems, the control circuitry is configured to calculate the charging curve based on the available charging period, the target state of charge, and the usage information.

In some example battery charging systems, the energy storage device is a first energy storage device of a plurality of energy storage devices; and the control circuitry is configured to predict the available charging period based on state of health information of the first energy storage device and state of health information of one or more alternative energy storage devices of the plurality of energy storage devices.

In some example battery charging systems, the energy storage device is a first energy storage device of a plurality of energy storage devices; and the predicting of the available charging period is further based on an availability of one or more alternative energy storage devices of the plurality of energy storage devices. In some such example battery charging systems, the usage information of the first energy storage device is first usage information; and the predicting of the available charging period is based on the first usage information and on second usage information of each of one or more available alternative energy storage devices of the one or more alternative energy storage devices.

In some example battery charging systems, the usage information comprises timestamps defining one or more charging periods of the plurality of charging periods.

In some example battery charging systems, the usage information comprises timestamps defining one or more discharging periods of the plurality of discharging periods.

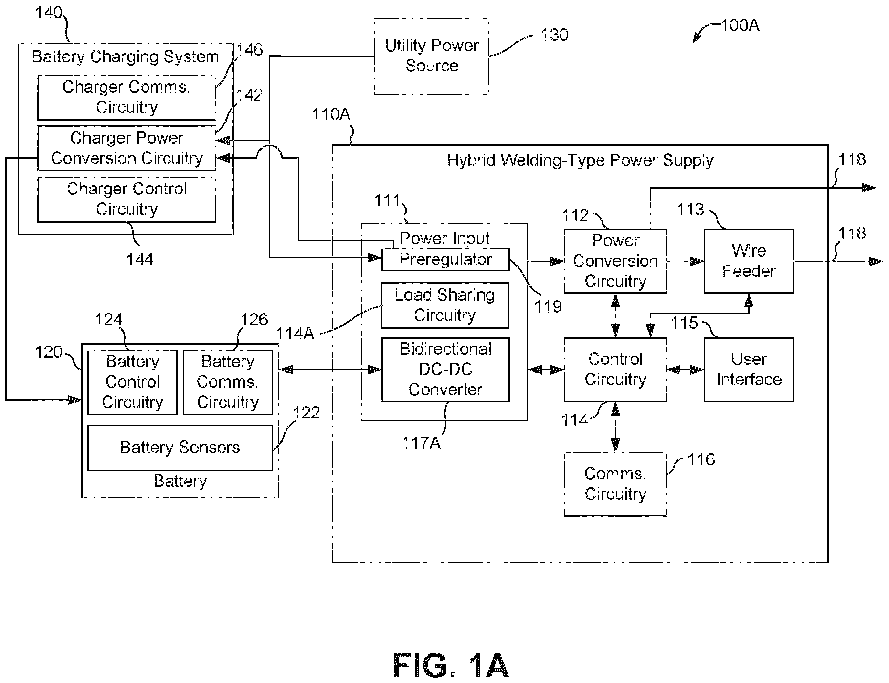

FIG. 1A is a block diagram of an example of a hybrid welding-type system 100A. The hybrid welding-type system 100A includes a hybrid welding-type power supply 110A. In the example of FIG. 1A, the hybrid welding-type power supply 110A includes a power input 111, power supply power conversion circuitry 112, a wire feeder 113, power supply control circuitry 114, a user interface 115, and power supply communications circuitry 116.

The hybrid welding-type power supply 110A is connected to a battery 120 (e.g., an energy storage device) and a utility power source 130. The battery 120 may be a single energy storage device or any plurality of energy storage devices, including any combination of one or more energy storage devices of one or more different energy storage device types (e.g., having different brands, models, storage capacities, charging parameters, output powers, energy storage mechanisms, and/or one or more other differing qualities and/or aspects). The utility power source 130 may be a single power source or any plurality of power sources, including any combination of one or more different power source types (e.g., one or more generators, one or more power mains, one or more battery-powered inverter supplies, one or more work trucks, and/or one or more of any other power sources providing alternating current ("AC") power and/or direct current ("DC") power).

The hybrid welding-type power supply 110A may be powered by either or both of the battery 120 (e.g., by one energy storage device or by any plurality of energy storage devices) and/or the utility power source 130 (e.g., by one power source or by any plurality of power sources) at any given time. A battery charging system 140 is used to charge the battery 120 to provide the battery 120 with stored power for powering the hybrid welding-type power supply 110A and/or one or more other devices and/or systems.

The utility power source 130 includes one or more power sources providing input power to any, some, or all of the battery 120, the hybrid welding-type power supply 110A, and/or the battery charging system 140. While FIG. 1A depicts an example wherein the utility power source 130 as being coupled to both the hybrid welding-type power supply 110A and the battery charging system 140, in other examples the battery charging system 140 is charged by one or more first utility power sources while the hybrid welding-type power supply 110A is coupled to one or more second power sources distinct from the one or more first power sources. For example, the battery charging system 140 may be located at a separate location, site, and/or facility than the hybrid welding-type power supply 110A where the battery 120 is charged for the battery 120 to later be brought to the hybrid welding-type power supply 110A.

The battery 120 may include any type or combination of types of energy storage devices, such as one or more batteries, one or more supercapacitors, one or more thermal energy storage devices, one or more chemical energy storage devices, one or more mechanical energy storage devices, and/or one or more other energy storage devices. While the following examples are discussed with reference to the battery 120 being a "battery," this disclosure applies to any other type of energy storage that is capable of adaptation for welding. Accordingly, the battery 120 may be replaced by any type of energy storage device and/or any combination of one or more energy storage devices of one or more energy storage device types.

In some examples, the battery 120 may include one or more battery sensors 122, battery control circuitry 124 (e.g., including a management system of the battery 120), and/or battery communications circuitry 126 (e.g., a transceiver). The battery control circuitry 124 may control (e.g., independently or according to one or more instructions and/or control signals) charging and discharging of individual cells of the battery 120 and/or internal load balancing between cells of the battery 120. The battery control circuitry 124 may additionally and/or alternatively store information of and/or about charging and/or discharging of the battery 120. In some examples, the battery communications circuitry 126 enables communication of information to and/or from external devices. In some such examples, the battery communications circuitry 126 enables control of one or more aspects of the battery 120 by an external device. In some such examples, the battery control circuitry 124 receives instructions (e.g., in a control signal) via the battery communications circuitry 126 governing some or all of the operations of the battery control circuitry 124. In some examples, the one or more battery sensors 122 and/or the battery control circuitry 124 may generate and/or store (e.g., in a management system stored in a memory of the battery control circuitry 124) information relating to usage information of the battery 120, charging information of the battery 120, scheduling information of the battery 120, a state of charge ("SoC") of the battery 120 (i.e., an amount of charge of the battery 120, e.g., measured in kilowatt-hours ("kWh"), as a percentage of a maximum storage capacity, etc.), a parameter of a power output of the battery 120 (e.g., one or more measurements of voltage, current, frequency, and/or one or more other parameters), a location of the battery 120, a coupling state of the battery 120 (e.g., whether the battery 120 is coupled to the hybrid welding-type system 100A and/or the battery charging system 140), and/or other information about a state of the battery 120. Information generated by the battery 120 may be communicated (e.g., via sending an input signal containing the information) by the battery communications circuitry 126 to an external device.

In the example of FIG. 1A, the battery charging system 140 includes charger power conversion circuitry 142, charger control circuitry 144, and charger communications circuitry 146. The charger power conversion circuitry 142 may include one or more DC-DC converters, one or more AC-DC converters, one or more buck converters, one or more boost converters, one or more preregulators, and/or one or more other types of converters and/or power conversion circuitries configured to convert input power (e.g., AC power) to charging power (e.g., DC power) to charge the battery 120. The charger communications circuitry 146 (e.g., a transceiver) enables communication with external devices, e.g., the battery 120, the hybrid welding-type power supply 110A, the utility power source 130, etc. The charger control circuitry 144 may generate, store, read, and/or use information (e.g., about the battery 120, one or more power sources of the battery charging system 140 and/or the battery 120, and/or one or more other devices and/or systems), control (e.g., by generating a control signal transmitted by the charger communications circuitry 146) one or more devices and/or systems (e.g., the battery 120, one or more power sources of the battery charging system 140 and/or the battery 120, and/or one or more other devices and/or systems), and/or send and/or receive (e.g., via the charger communications circuitry 146) information (e.g., via an input signal) to and/or from one or more devices and/or systems (e.g., the battery 120, one or more power sources of the battery charging system 140 and/or the battery 120, and/or one or more other devices and/or systems). The charger communications circuitry 146 may communicate with the battery communications circuitry 126, the power supply communications circuitry 116, and/or one or more other communications circuitries to transmit and/or receive usage information of the battery 120, charging information of the battery 120, scheduling information, an SoC of the battery 120, a parameter of a power output of the battery 120, a location of the battery 120, a coupling state of the battery 120, and/or other information of the battery 120. The charger communications circuitry 146 may, additionally and/or alternatively, receive charging information and/or other information of a power source of the battery charging system 140 and/or the battery 120 (e.g., the power input 111 and/or the utility power source 130), transmit one or more control signals to control the battery 120 (e.g., a display of the battery 120), transmit one or more control signals to control one or more power sources of the battery charging system 140 and/or the battery 120 (e.g., to control charging of the battery 120), and/or transmit and/or receive one or more other instructions (e.g., as a control signal) and/or one or more other types of information (e.g., as an input signal) from one or more other devices and/or systems.

Any, some, or all of the control circuitries 114, 124, 144 may include a processor or other logic circuitry. Any, some, or all of the control circuitries 114, 124, 144 may include any general-purpose central processing unit (CPU), embedded processing system, or system-on-chip from any manufacturer. In some examples, any, some, or all of the control circuitries 114, 124, 144 may include one or more specialized processing units, such as graphic processing units and/or digital signal processors. Any, some, or all of the control circuitries 114, 124, 144 may execute machine-readable instructions that may be stored locally at the processor (e.g., in an included cache), in a random-access memory (or other volatile memory), in a read only memory (or other non-volatile memory such as FLASH memory), in a mass storage device, and/or in another device (e.g., another of the control circuitries 114, 124, 144) accessible via any, some, or all of the communications circuitries 116, 126, 146. Example mass storage devices may be a hard drive, a solid-state storage drive, a hybrid drive, a RAID array, and/or any other mass data storage device.

In some examples, any, some, or all of the control circuitries 114, 124, 144 and/or one or more other control circuitries (e.g., control circuitry of the utility power source 130) may generate, use, and/or store information and may additionally and/or alternatively communicate information (e.g., via any, some, or all of the communications circuitries 116, 126, 146) between one or more of each other and/or with one or more other devices. For example, any, some, or all of the control circuitries 114, 124 and/or the battery charging system 140 may generate, use, store, and/or communicate usage information of the battery 120, charging information of the battery 120, scheduling information, charging information of a power source for the battery 120 and/or the battery charging system 140 (e.g., the power input 111, the utility power source 130, and/or the charger power conversion circuitry 142), a control signal (e.g., to control any, some, or all of the power input 111, the power supply power conversion circuitry 112, the battery 120, the utility power source 130, and/or the battery charging system 140), an input signal (e.g., providing information to any, some, or all of the control circuitries 114, 124, 144), and/or other information of and/or about the battery 120 and/or one or more other devices, systems, and/or components.

Any, some, or all of communications circuitries 116, 126, 146 and/or one or more other communications circuitries (e.g., communications circuitry of the utility power source 130) may be configured to communicate through any wired and/or wireless techniques. In some examples, the charger communications circuitry 146, the battery communications circuitry 126, the power supply communications circuitry 116, and/or other one or more other communications circuitries (e.g., communications circuitry of the utility power source 130) may communicate via serial communications through electrical couplings (e.g., one or more cables, one or more battery contacts, and/or one or more other couplings) between the battery 120, the power input 111, the battery charging system 140, and/or the utility power source 130. In some additional and/or alternative examples, the charger communications circuitry 146, the battery communications circuitry 126, the power supply communications circuitry 116, and/or other communications circuitry (e.g., communications circuitry of the utility power source 130) may communicate wirelessly via Bluetooth, Wireless USB, IrDA, Z-Wave, ZigBee, RFID, one or more other NFC protocols, and/or one or more other protocols for close-proximity and/or wireless communication.

As described in further detail elsewhere herein, usage information of the battery 120 includes information related to use of the battery 120 (e.g. previous use and/or planned potential future use of the battery 120) generated by monitoring, testing, and/or measuring the battery 120 (e.g., via any, some, or all of the control circuitries 114, 124, 144 and/or the one or more battery sensors 122) during usage and/or storage of the battery 120 (e.g., to generate "historical" usage information) and/or by estimating usage of the battery 120 in one or more planned potential future uses of the battery 120 (e.g., to generate "scheduled" usage information). Usage information may be stored in a management system of the battery 120. A management system of the battery 120 may be located in a memory of the battery control circuitry 124, in a memory of the charger control circuitry 144, in a memory of one or more remote computing devices (e.g., a cloud database and/or computing system), and/or in one or more other memories. Accordingly, usage information of the battery 120 may be accessed by the charger control circuitry 144 (e.g., via the charger communications circuitry 146) to determine a charging schedule (e.g., one or more available charging periods, one or more target SoCs, and/or one or more charging curves) of the battery 120 and/or to otherwise read, use, and/or modify any, some, or all of the usage data.

Charging information of the battery 120 includes information relating to charging parameters of the battery 120 (e.g., stored in a memory of either or both of the control circuitries 124, 144) and/or measurements of the battery 120 (e.g., measured by the one or more battery sensors 122). In examples, charging parameters of the battery 120 may include an overvoltage threshold of the battery 120, an undervoltage threshold of the battery 120, a discharge maximum temperature of the battery 120, a discharge recovery temperature of the battery 120, a type of the battery 120, an identifier of the battery 120, and/or one or more other parameters relating to necessary and/or preferred parameters for charging of the battery 120. In examples, measurements of the battery 120 may include an SoC of the battery 120 (e.g., measured in kWh, as a percentage of a maximum storage capacity, etc.), a voltage of charging power received by the battery 120, a current of charging power received by the battery 120, a temperature of the battery 120 (e.g., during charging and/or discharging of the battery 120), a location of the battery 120, and/or one or more other measurements of the battery 120 and/or power received by the battery 120. Accordingly, recording of charging information of the battery 120 may be used to generate (e.g., by any, some, or all of the control circuitries 114, 124, 144) historical usage information of the battery 120.

Scheduling information of the battery 120 includes information relating to planned potential uses of the battery 120 and/or planned operations (e.g., welding operations) for which at least one energy storage device of a plurality of energy storage devices comprising the battery 120 may be used. Accordingly, scheduling information of the battery 120 may be used, in whole or in part, to determine when the battery 120 may be used in the future. In examples, scheduling information of a system or device to be potentially powered by the battery 120 (e.g., the hybrid welding-type system 100A and/or one or more other welding-type systems) includes information relating to one or more planned future operations which may involve the use of the battery 120 and/or one or more alternative energy storage devices of a plurality of energy storage devices comprising the battery 120. In some examples, a planned future operation is a welding operation to be conducted by a welding-type system (e.g., the hybrid welding-type system 100A and/or one or more other welding-type systems). In some such examples, scheduling information about a planned future welding operation includes a planned start time of a planned future welding operation, a duration of a planned future welding operation, one or more welding parameters of a planned future welding operation, an estimated power consumption of a planned future welding operation, one or more estimated load characteristics and/or duty cycles of a planned future welding operation, and/or one or more other aspects of a planned future welding operation. Accordingly, scheduling information (e.g., of the battery 120 and/or of one or more systems and/or devices to be potentially powered by the battery 120) may be used to estimate and/or predict (e.g., by the charger control circuitry 144) scheduled usage information of the battery 120.

Charging information of a power source for charging of the battery 120 (e.g., the power input 111, the utility power source 130, and/or the charger power conversion circuitry 142) includes, e.g., a voltage of an input power and/or a charging power generated, received, and/or converted by the power source, a current of an input power and/or a charging power generated, received, and/or converted by the power source, a load on the power source, an availability of the power source, and/or one or more other measurements, parameters, and/or conditions of the power source.

In some examples, the battery charging system 140 receives input power (e.g., AC power) from a power source (e.g., the power input 111 and/or the utility power source 130) and converts the input power to charging power (e.g., DC power). When the charger control circuitry 144 detects that the battery 120 is coupled to the battery charging system 140 (and/or one or more other power sources, such as the power input 111, the power supply power conversion circuitry 112, and/or the utility power source 130), the charger control circuitry 144 may control the charger power conversion circuitry 142 (and/or one or more other power sources) to convert input power (received from the power source) to charging power to charge the battery 120 (e.g., by delivering the charging power to the battery 120 via a DC bus). To convert the input power to charging power, the charger power conversion circuitry 142 (and/or one or more other power sources) may condition the input power based on a charging schedule of the battery 120 (e.g., determined by the charger control circuitry 144), usage information of the battery 120, charging information of the battery 120, scheduling information of the battery 120 and/or of one or more systems and/or devices powered by the battery 120 (e.g., the hybrid welding-type power supply 110A), charging information of one or more power sources of the battery charging system 140 and/or the battery 120, an energy storage device type of the battery 120, an identifier of the battery 120, and/or other information of the battery 120.

In some examples, the charger control circuitry 144 communicates with the battery 120 via the communications circuitries 126, 146 to determine an energy storage device type of the battery 120 (e.g., whether the battery 120 is a recognized battery unit). For example, the hybrid welding-type power supply 110A may be configured to operate with certain types of battery packs having specific characteristics. The charger control circuitry 144 may communicate with the battery control circuitry 124 in the battery 120 via the battery communications circuitry 126 to identify the type of battery pack and, if a type of battery pack is identified, determine whether the identified type is recognized. The battery 120 may be recognized by being authorized, approved, included in a list of battery packs accessible by the charger control circuitry 144, and/or through any other method of recognition or identification of the battery 120 as suitable.

When the power input 111 is connected to both the utility power source 130 and to the battery 120, the power input 111 may provide charging power to charge the battery 120. Conversely, when energy is required that is not available from the utility power source 130, the battery 120 may provide power to the hybrid welding-type power supply 110A.

In some examples, the battery 120 is charged separately from the power input 111 (e.g., via the battery charging system 140 at a separate location from the hybrid welding-type system 100A). In some such examples, the battery 120 only provides power to the power input 111 without being charged by the power input 111. In some examples, the power input 111 provides input power (e.g., AC power) to the battery charging system 140, and the charger power conversion circuitry 142 converts the input power to charging power and provides the charging power to the battery 120. In some examples, the power input 111 (e.g., as controlled by the charger control circuitry 144) converts input power (received from, e.g., the utility power source 130) to charging power and provides the charging power directly to the battery 120 (e.g., via a DC bus).

The power input 111 may include a bidirectional DC-DC converter 117A. The bidirectional DC-DC converter 117A is a circuit that converts input power (e.g., from the DC bus powered by the utility power source 130) to charge the battery 120. The bidirectional DC-DC converter 117A also converts power stored in the battery 120 to converted power to output to the power supply power conversion circuitry 112 (e.g., via one or more DC buses) for output to the power supply power conversion circuitry 112. In other examples, the bidirectional DC-DC converter 117A is replaced with separate converters (e.g., one or more buck converters and one or more boost converters) to charge the battery 120 and/or to discharge the battery 120. In some examples, the bidirectional DC-DC converter 117A is incorporated into the power supply power conversion circuitry 112.

The power input 111 may include a preregulator 119. The power input 111 supplies one or more DC buses with energy (e.g., a DC bus for the output of the preregulator 119 and one or more DC buses for the output of the bidirectional DC-DC converter 117A, one DC bus for each battery connection, etc.). The preregulator 119 may include a rectifier to rectify the AC input from the utility power source 130. The preregulator 119 further includes circuitry to convert the rectified AC input to the bus voltage for providing power to the power supply power conversion circuitry 112. In some examples, the preregulator 119 is incorporated into the power supply power conversion circuitry 112.

In examples, the power supply control circuitry 114 monitors properties and/or usage of the battery 120 and/or the utility power source 130, e.g., to provide usage information, charging information, scheduling information, and/or other information of the battery 120, the utility power source 130, and/or welding capacity to the battery control circuitry 124 (e.g., a management system of the battery 120), the charger control circuitry 144, an operator of the hybrid welding-type system 100A, one or more remote computers (e.g., a cloud database and/or computing system, a remote management system of the battery 120, etc.), and/or one or more other systems, devices, and/or individuals. For example, as the power available to the power input 111 from the battery 120 increases, the power supply control circuitry 114 may determine that thicker materials can be welded, a longer time, length, and/or quantity of welds of a given length are available to weld for a given set of parameters, use of the utility power source 130 can be decreased, the types of usable weld processes may be increased, the usable consumable sizes (e.g., electrode diameters) may be increased, and/or other enhancements and/or augmentations to welding may become available. Conversely, as the power available from the battery 120 decreases, the power supply control circuitry 114 may determine that the thickness of materials that can be welded decreases, less time is available to weld for a given set of parameters, more utility power source 130 may be needed, the types of usable weld processes are limited, the usable consumable sizes (e.g., electrode diameters) decrease, and/or the hybrid welding-type power supply 110A becomes otherwise limited.

The power supply control circuitry 114 may receive (e.g., from either or both of the battery control circuitry 124 and/or the charger control circuitry 144) and use properties of the battery 120 (e.g., usage information and/or charging information) to determine welding capacity, supported values for welding parameters, and/or alternatives to unsupported values for welding parameters. In examples, the hybrid welding-type power supply 110A includes the power supply communications circuitry 116, e.g., to communicate with the battery charging system 140 (e.g., to receive instructions regarding charging of the battery 120 and/or to send information regarding past, ongoing, or planned future welding operations) and/or with the battery 120 (e.g., to determine the properties of the battery 120).

In some examples, the user interface 115 provides a utility power selection input that defines different levels of power to be drawn from the utility power source 130 (e.g., with the balance drawn from the battery 120). Example utility power levels may include a low utility draw level (e.g., limit utility drawn to only levels necessary to sustain the welding), a medium utility draw level, and a high utility draw level (e.g., limit power drawn from the battery 120).

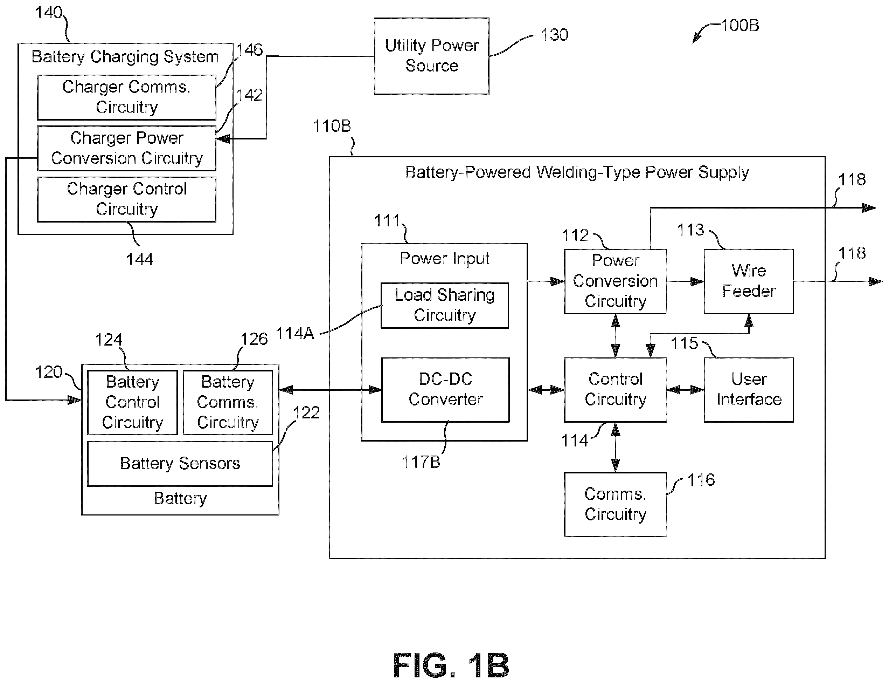

FIG. 1B is a block diagram of an example of a battery-powered welding-type system 100B. The example of the battery-powered welding-type system 100B depicted in FIG. 1B is similar to the hybrid welding-type system 100A of FIG. 1A, and functionalities of components of the hybrid welding-type system 100A, as described elsewhere herein, may also be generally applicable to any, some, or all components of the battery-powered welding-type system 100B. A battery-powered welding-type power supply 110B of the battery-powered welding-type system 100B similarly includes the power input 111, the power supply power conversion circuitry 112, the wire feeder 113, the power supply control circuitry 114, the user interface 115, and the power supply communications circuitry 116, as described elsewhere herein with reference to FIG. 1A. However, while the battery-powered welding-type power supply 110B is similar to the hybrid welding-type power supply 110A of FIG. 1A, the welding-type power supplies 110A, 110B differ in that the battery-powered welding-type power supply 110B is powered solely by the battery 120 (e.g., by one or more energy storage devices) and does not have an input for the utility power source 130. Accordingly, the battery-powered welding-type power supply 110B may include a unidirectional DC-DC converter 117B (e.g., instead of and/or in addition to the bidirectional DC-DC converter 117A and/or the preregulator 119) to convert power received from the battery 120 to supply power to the power supply power conversion circuitry 112.

Referring now to the examples of FIGS. 1A and 1B, in some examples, the power input 111 includes load sharing circuitry 114A, one or more converters, and/or one or more multi-stage converters to supply a DC bus with energy from a plurality of batteries and/or other energy storage devices. For example, the battery 120 may include a plurality of energy storage devices electrically coupled to the power input 111, and the load sharing circuitry 114A controls a distribution of loads among the energy storage devices and, in some such examples, the utility power source 130. In some examples, the power input 111 may accept energy from different types of batteries simultaneously in addition to accepting energy from multiple batteries of the same type.

The power supply power conversion circuitry 112 is a circuit that converts DC power (received via a DC bus) to a welding output 118 (e.g., welding-type power). The DC power used by the power supply power conversion circuitry 112 is received from the power input 111. The power supply power conversion circuitry 112 converts the energy present at a DC bus (e.g., from the power input 111) to the welding output 118. For example, the power supply power conversion circuitry 112 may include a switched mode power supply, which is controlled by the power supply control circuitry 114 based on specified weld parameters and feedback. Accordingly, the power supply control circuitry 114 controls the power supply power conversion circuitry 112 to output the welding output 118.

In the example of FIG. 1A, the power supply control circuitry 114 may control the bidirectional DC-DC converter 117A to convert power from the power input 111 to charge the battery 120 and/or controls the bidirectional DC-DC converter 117A to convert power from the battery 120 to provide the converted battery power to the power supply power conversion circuitry 112, e.g., when the hybrid welding-type power supply 110A requires power to conduct a welding operation. The power supply control circuitry 114 may further control the bidirectional DC-DC converter 117A to charge the battery 120 when instructed by either or both of the control circuitries 114, 144 and/or when the utility power source 130 is available and at least a portion of the utility power source 130 is available for charging the battery 120 (e.g., the utility power source 130 is not completely consumed by the power supply power conversion circuitry 112 and/or the wire feeder 113). Conversely, the power supply control circuitry 114 controls the bidirectional DC-DC converter 117A to convert power from the battery 120 to provide the converted battery power to the power supply power conversion circuitry 112 when a demand for welding power is higher than can be provided by the utility power source 130 and/or when the utility power source 130 is unavailable.

In the example of FIG. 1B, the power supply control circuitry 114 may control the unidirectional DC-DC converter 117B to convert power from the battery 120 to provide the converted battery power to the power supply power conversion circuitry 112, e.g., when the battery-powered welding-type power supply 110B requires power to conduct a welding operation.

Referring again to the examples of FIGS. 1A and 1B, in examples, the wire feeder 113 includes a wire feed motor to provide electrode wire to the welding operation (e.g., when the welding operation involves a wire feeder, such as when gas metal arc welding, flux cored arc welding, etc.). When the welding operation involves a wire feeder, the power supply control circuitry 114 controls power to the wire feeder 113. The wire feeder 113 may be powered by the welding output 118 or by another output from the power supply power conversion circuitry 112. In some other examples, the wire feeder 113 may be a separate device connected to the welding output 118 external to either or both of the welding-type power supplies 110A, 110B.

In some examples, either or both of the welding-type power supplies 110A, 110B includes and/or is coupled to (e.g., via a direct electrical coupling and/or via the power supply communications circuitry 116) the user interface 115. The user interface 115 enables input to and/or output from either or both of the welding-type power supplies 110A, 110B to a user. The power supply control circuitry 114 may indicate, via the user interface 115, the SoC of the battery 120 and/or a mode of operation, such as a battery charging mode, an external power welding mode (e.g., a welding mode of the hybrid welding-type power supply 110A powered by the utility power source 130), a combination welding-charging mode (e.g., the hybrid welding-type power supply 110A welding and charging the battery 120 using utility power source 130), a battery-powered welding mode, and/or a hybrid welding mode (e.g., a welding boost mode of the hybrid welding-type power supply 110A powered by the battery 120 and the utility power source 130). The user interface 115 may further include inputs to allow an operator to specify welding parameters, such as a workpiece thickness, output voltage, output current, wire feed speed, welding wire diameter, welding wire type, welding process, pulse frequency, pulse magnitude, and/or any other desired welding parameter values.

The illustration of FIGS. 1A and 1B depict examples wherein the battery charging system 140 is positioned in vicinities of the hybrid welding-type power supply 110A (e.g., as a part of the hybrid welding-type system 100A) and the battery-powered welding-type power supply 110B (e.g., as part of the battery-powered welding-type system 100B), respectively. In other examples, the battery charging system 140 may be positioned apart from and/or at a separate location, site, and/or facility than either or both of the welding-type systems 100A, 100B and/or either or both of the welding-type power supplies 110A, 110B. For example, a user of the battery-powered welding-type system 100B may take the battery 120 from a central storage location (e.g., a warehouse) where the battery charging system 140 charges the battery 120 and bring the battery 120 and the battery-powered welding-type system 100B (e.g., a welding system that is a component of and/or coupled to a work truck) to a location separate from the central storage location to conduct a welding operation using the battery-powered welding-type system 100B, as powered by the battery 120.

In some examples, input power generated by the utility power source 130, the power input 111, the bidirectional DC-DC converter 117A, the unidirectional DC-DC converter 117B, and/or the power supply power conversion circuitry 112 is charging power. Accordingly, in some such examples, any, some, or all of the utility power source 130, the power input 111, the bidirectional DC-DC converter 117A, the unidirectional DC-DC converter 117B, and/or the power supply power conversion circuitry 112 may provide charging power directly to the battery 120 for charging (e.g., bypassing the charger power conversion circuitry 142). In some such examples, any, some, or all of the utility power source 130, the power input 111, the bidirectional DC-DC converter 117A, the unidirectional DC-DC converter 117B, and/or the power supply power conversion circuitry 112 may be controlled by the charger control circuitry 144 to control charging of the battery 120.

In some examples, the battery charging system 140 and/or one or more components thereof is integrated into and/or is a component of either or both of the welding-type systems 100A, 100B. In some examples, the battery charging system 140 and/or one or more components thereof is integrated into and/or is a component of the battery 120, the utility power source 130, and/or either or both of the welding-type power supplies 110A, 110B. In some such examples, the battery charging system 140 and/or one or more components thereof may be integrated into and/or be a component of one or more components of the utility power source 130, the battery 120, and/or either or both of the welding-type power supplies 110A, 110B. In some examples, the charger power conversion circuitry 142 may be integrated into and/or be a component of the power supply power conversion circuitry 112, the bidirectional DC-DC converter 117A, the unidirectional DC-DC converter 117B, the utility power source 130, and/or the battery 120. In some examples, the charger communications circuitry 146 may be integrated into and/or be a component of the power supply communications circuitry 116, the battery communications circuitry 126, and/or the utility power source 130. In some examples, the charger control circuitry 144 may be integrated into and/or be a component of the power supply control circuitry 114, the load sharing circuitry 114A, the battery control circuitry 124, and/or the utility power source 130. In some examples, the charger control circuitry 144 may be and/or include one or more remote computing systems (e.g., a cloud computing system) and/or access one or more remote memories (e.g., a cloud database). In some examples, the battery charging system 140 may be a plurality of battery charging systems (e.g., communicatively coupled to one another via respective charger communications circuitries of each battery charging system), e.g., dispersed (in whole and/or in part) among a plurality of locations, among a plurality of systems (e.g., either or both of the welding-type systems 100A, 100B and/or one or more other systems), and/or among a plurality of devices (e.g., the battery 120, the utility power source 130, and/or either or both of the welding-type power supplies 110A, 110B).

Any, some, or all of the control circuitries 114, 124, 144 monitor usage of the battery 120 (e.g., during welding operations using the battery 120) to generate usage information of the battery 120 and communicate the usage information to a management system of the battery 120 for storage. In examples, the management system may include data stored in one or more memories of the battery control circuitry 124, one or more memories of the charger control circuitry 144, and/or one or more other memories (e.g., a cloud database and/or computing system accessible via the charger communications circuitry 146). As a result, the usage information of the battery 120 may be accessed by the charger communications circuitry 146 and/or by one or more other communications circuitries.

The charger control circuitry 144 utilizes usage information of the battery 120 to determine a charging schedule of the battery 120. A charging schedule of the battery 120 includes one or more available charging periods of the battery 120 (e.g., defined by a timestamp of a start time and/or a timestamp of an end time), one or more target SoCs of the battery 120 (e.g., measured in kwh, as a percentage of a maximum storage capacity, etc.), one or more charging curves of the battery 120, and/or one or more other aspects of planned charging of the battery 120. For example, the charger control circuitry 144 (e.g., upon initiating a wired or wireless connection with the battery 120) predicts one or more available charging periods of the battery 120 based on usage information of the battery 120. In some examples, the charger control circuitry 144 predicts only one available charging period of the battery 120. In other examples, the charger control circuitry 144 may predict any plurality of available charging periods of the battery 120, e.g., to account for available charging periods of one or more other energy devices and/or other periods in which the battery 120 may not be available for charging. In some examples, the charger control circuitry 144 also determines a target SoC of the battery 120 based on usage information of the battery 120. In some examples, based on the target SoC of the battery 120 and an end time of an available charging period (or an end time of a last available charging period of a plurality of available charging periods) of the battery 120, the charger control circuitry 144 determines a charging curve configured to charge the battery 120 to the target SoC by the end time of the (last) available charging period of the battery 120. The battery charging system 140 can then charge the battery 120 based on the charging curve by, e.g., controlling the charger power conversion circuitry 142, the power input 111, the power supply power conversion circuitry 112, and/or the utility power source 130 to charge the battery 120 according to the charging curve.

Usage information includes, e.g., information relating to any, some, or all of one or more past charging periods of the battery 120, one or more scheduled charging periods of the battery 120, one or more past discharging periods of the battery 120, one or more scheduled discharging periods of the battery 120, one or more past disuse periods of the battery 120, and/or one or more scheduled disuse periods of the battery 120. A past charging period is historical usage information identifying a previous period of time in which the battery 120 was being charged, and a scheduled charging period is scheduled usage information identifying a future period in which the battery 120 is planned to be charged (e.g., according to scheduling information stored in one or more memories of any, some, or all of the control circuitries 114, 124, 144 and/or one or more other control circuitries). A past discharging period is historical usage information identifying a previous period of time in which the battery 120 provided power (i.e., "discharged") to another device (e.g., the power input 111), and a scheduled discharging period is scheduled usage information identifying a future period in which the battery 120 is planned to be discharged (e.g., according to scheduling information stored in one or more memories of any, some, or all of the control circuitries 114, 124, 144 and/or one or more other control circuitries). A past disuse period is historical usage information identifying a previous period of time in which the battery 120 was neither charging nor discharging, and a scheduled disuse period is scheduled usage information identifying a future period in which the battery 120 is planned to be neither charged nor discharged (e.g., according to scheduling information stored in one or more memories of any, some, or all of the control circuitries 114, 124, 144 and/or one or more other control circuitries). In some examples, usage information may include one or more quantities of charging periods of the battery 120 (e.g., over the course of the lifespan of the battery 120 or of another time period), discharging periods of the battery 120 (e.g., over the course of the lifespan of the battery 120 or of another time period), and/or disuse periods of the battery 120 (e.g., over the course of the lifespan of the battery 120 or of another time period).

In some examples, usage information may include one or more timestamps associated with one or more charging periods (e.g., past charging periods and/or scheduled charging periods), one or more discharging periods (e.g., past discharging periods and/or scheduled discharging periods), and/or one or more disuse periods (e.g., past disuse periods and/or scheduled disuse periods). Timestamps identify a point in time and are associated with another piece of information (e.g., usage information). Timestamps may be used to define a start time and/or an end time of a respective one or more charging periods, discharging periods, and/or disuse periods. In some examples, usage information includes one or more durations (e.g., a magnitude of time) associated with one or more charging periods, one or more discharging periods, and/or one or more disuse periods. A timestamp may additionally and/or alternatively be a point in time within a charging period, a discharging period, a disuse period, or another time period.

In some examples, usage information includes one or more SoCs of the battery 120, e.g., at one or more timestamps and/or otherwise associated with other usage information of the battery 120.

In examples, usage information may additionally and/or alternatively include any, some, or all of one or more load characteristics of the battery 120, one or more duty cycles of the battery 120, SoC information of the battery 120, one or more average discharge rates of the battery 120, one or more peak discharge rates of the battery 120, one or more discharging quantities of the battery 120, one or more quantities of total energy discharges of the battery 120, one or more discharging frequencies of the battery 120, one or more welding parameters of one or more welding operations conducted using the battery 120, state of health ("SoH") information of the battery 120, a maximum storage capacity of the battery 120, and/or one or more other types of information of and/or about the battery 120.

An available charging period of the battery 120 is a period of time in which the charger control circuitry 144 predicts the battery 120 will be available for the battery charging system 140 to charge and wherein the battery charging system 140 has capacity to charge the battery 120. In some examples, the charger control circuitry 144 predicts one or more available charging periods of the battery 120, e.g., by identifying timing of usage trends of the battery 120 based on historical usage information and/or to estimate timing of one or more planned potential future uses of the battery 120 based on scheduled usage information. In some examples, the charger control circuitry 144 uses one or more previous charging periods of the battery 120, one or more previous discharging periods of the battery 120, and/or one or more previous disuse periods of the battery 120 to predict one or more available charging periods of the battery 120. For example, the charger control circuitry 144 may identify one or more periods of time wherein the battery 120 is generally in use (e.g., one or more discharging periods) and/or periods of time wherein the battery 120 is generally available for charging (e.g., one or more charging periods and/or one or more disuse periods) to predict one or more available charging periods of the battery 120.

In some examples, the charger control circuitry 144 uses one or more data points of any, some, or all types of usage information described herein to predict one or more available charging periods of the battery 120. In some examples, the charger control circuitry 144 uses only historical usage information (e.g., previous charging periods, previous discharging periods, and/or previous disuse periods) to predict one or more available charging periods of the battery 120. In some examples, the charger control circuitry 144 uses only scheduled usage information (e.g., scheduled charging periods, scheduled discharging periods, and/or scheduled disuse periods) to predict one or more available charging periods of the battery 120. In some examples, the charger control circuitry 144 uses a combination of historical usage information and scheduled usage information to predict one or more available charging periods of the battery 120.

In some examples, the battery charging system 140 is used to charge a plurality of energy storage devices including the battery 120. In some such examples, the charger control circuitry 144 predicts the one or more available charging periods of the battery 120 based (in whole or in part) on an objective of maintaining, increasing, maximizing, and/or limiting a reduction of uniformity of SoH among any, some, or all of the energy storage devices of the plurality of energy storage devices and/or on an objective of decreasing damage to a SoH of the battery 120 and/or of one or more energy storage devices of the plurality of energy storage devices caused by charging. Accordingly, in some examples, the charger control circuitry 144 predicts the available charging period of the battery 120 based on SoH information of the battery 120 and SoH information of one or more alternative energy storage devices of the plurality of energy storage devices. In some examples, the charger control circuitry 144 determines an availability of one or more alternative energy storage devices of the plurality of energy storage devices (e.g., based on whether the alternative energy storage devices are electrically and/or communicatively coupled to the battery charging system 140, scheduled usage information of the alternative energy storage devices, etc.) and predicts the one or more available charging periods of the battery 120 based on the availability of the one or more alternative energy storage devices. In some such examples, the battery charging system 140 may compare SoH information of the battery 120 to SoH information of one or more available energy storage devices of the one or more alternative energy storage devices and predict the one or more available charging period of the battery 120 based on the SoH information of the battery 120 and the SoH information of each of the or more alternative energy storage devices.

For example, a first energy storage device may have a better SoH than the battery 120, and a second energy storage device may have worse SoH than the battery 120. In some such examples, the battery charging system 140 may predict a second available charging period for the second energy storage device that is greater than a respective available charging period predicted for the battery 120, and the battery charging system 140 may predict a first available charging period for the first energy storage device that is less than the respective available charging period predicted for the battery 120. Accordingly (e.g., because faster charging may be more likely to more significantly affect an SoH of an energy storage device), charging of the first energy storage device during the first available charging period may harm the SoH of the first energy storage device to a greater extent than harm to the SoH of the battery 120 caused by the charging of the battery 120 during the respective available charging period, and charging of the second energy storage device during the second available charging period may harm the SoH of the second energy storage device may harm the SoH of the second energy storage device to a lesser extent than harm to the SoH of the battery 120 caused by the charging of the battery 120 during the respective available charging period. The charger control circuitry 144 may, thereby predict available charging periods of the battery 120 and the first and second energy storage devices in a way that maintains, increases, maximizes, and/or limits a reduction of uniformity of SoH of the battery 120 and the first and second energy storage devices and/or that reduces damage to SoH of the battery 120, the first energy storage device, and/or the second energy storage device.

A target SoC of the battery 120 is, e.g., an amount or range of kWh, a percentage or range of percentages of a maximum storage capacity of the battery 120, etc. which the charger control circuitry 144 determines that the battery 120 should have by an end time of an available charging period. In some examples, the charger control circuitry 144 determines a target SoC of the battery 120, e.g., by identifying consumption trends of the battery 120 based on historical usage information and/or by estimating consumption amounts of one or more planned potential future uses of the battery 120 based on scheduled usage information. In some examples, the charger control circuitry 144 may predict a duration of a subsequent discharge period (e.g., a discharge period predicted and/or scheduled to start at the end time of an available time period of the battery 120, as predicted by the charger control circuitry 144) and determine the target SoC of the battery 120 based on the predicted duration (e.g., based on an expected SoC necessary for the battery 120 to operate throughout the predicted duration). In some such examples, the charger control circuitry 144 predicts the predicted duration based on one or more durations of one or more past discharging periods and/or based on one or more estimated durations of one or more planned potential future charging periods. In some additional and/or alternative examples, the charger control circuitry 144 may predict an energy amount of a subsequent discharge period and determine the target SoC of the battery 120 based on the predicted energy amount (e.g., equal to or in excess of the predicted energy amount). In some such examples, the charger control circuitry 144 predicts the predicted energy amount based on one or more energy amounts discharged in one or more past discharging periods and/or based on one or more estimated energy amounts estimated to be discharged in one or more planned potential future charging periods.

In some examples, the charger control circuitry 144 uses one or more previous charging periods of the battery 120, one or more previous discharging periods of the battery 120, and/or one or more previous disuse periods of the battery 120 to predict the target SoC of the battery 120. In some examples, the charger control circuitry 144 uses any, some, or all of usage information described herein to determine a target SoC of the battery 120. In some examples, the charger control circuitry 144 uses only historical usage information to determine a target SoC of the battery 120. In some examples, the charger control circuitry 144 uses only scheduled usage information to determine a target SoC of the battery 120. In some examples, the charger control circuitry 144 uses a combination of historical usage information and scheduled usage information to determine a target SoC of the battery 120.

In some examples, the charger control circuitry 144 determines the target SoC of the battery 120 based on discharging periods (e.g., previous discharging periods and/or scheduled discharging periods). In some examples, the charger control circuitry 144 determines the target SoC of the battery 120 based on one or more load characteristics associated with one or more discharge periods of the battery 120. In some examples, the charger control circuitry 144 determines the target SoC of the battery 120 based on one or more duty cycles associated with one or more discharge periods of the battery 120. In some examples, the charger control circuitry 144 determines the target SoC of the battery 120 based on one or more average discharge rates associated with one or more discharge periods of the battery 120. In some examples, the charger control circuitry 144 determines the target SoC of the battery 120 based on one or more peak discharge rates associated with one or more discharge periods of the battery 120. In some examples, the charger control circuitry 144 determines the target SoC of the battery 120 based on one or more average discharging quantities associated with one or more discharge periods of the battery 120. In some examples, the charger control circuitry 144 determines the target SoC of the battery 120 based on a discharging frequency of the discharging cycles of the battery 120.

A charging curve of the battery 120 includes one or more rates of charging (e.g., measured as a magnitude of current of charging power provided to the battery 120) of the battery 120 as a function of time during one or more available charging periods of the battery 120. A charging curve may include one or more steady rates and/or one or more variable rates (e.g., varying as a function of time, as a function of one or more charging parameters and/or measurements of the battery 120, and/or as a function of one or more other variables) of charging of the battery 120 from a first time (e.g., a start time of an available charging period and/or another time between a start time and an end time of an available charging period) until a second time (e.g., an end time of an available charging period and/or another time between a start time and an end time of an available charging period). In some examples, a charging curve may include one or more interruptions and/or other time periods in which the battery 120 is not being charged.

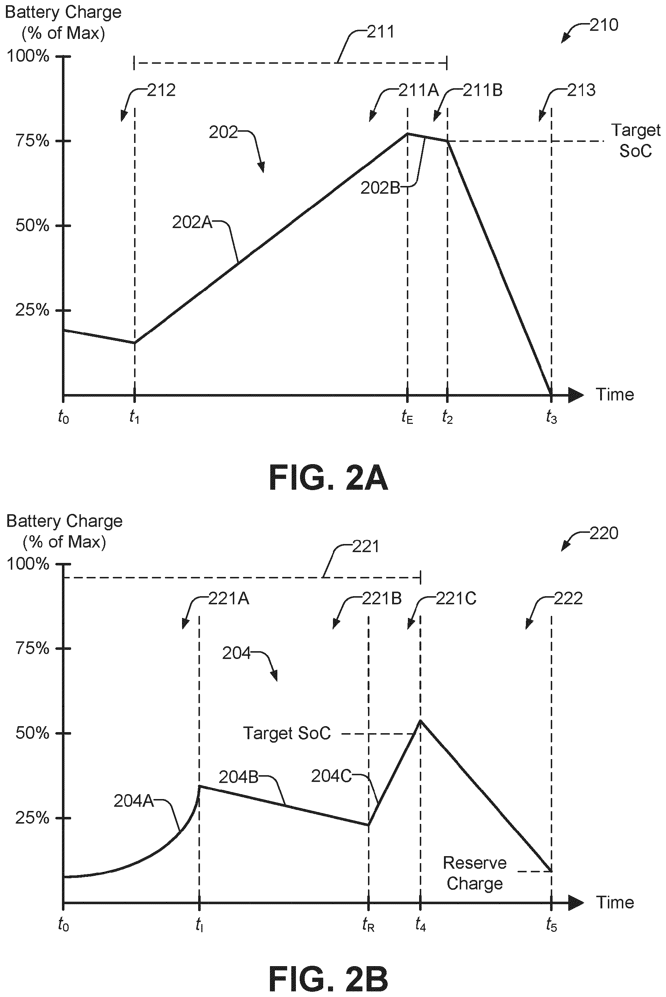

For example, referring to FIG. 2A, a first graph 210 depicts a first example of a charge of the battery 120 over time (x-axis: time; y-axis: battery charge percentage). At an initial time (*t*₀), the charger control circuitry 144 receives or otherwise becomes communicatively coupled with the battery 120. The charger control circuitry 144 determines that the battery 120 will be needed for use (e.g., in a welding operation) at a second time (*t*₂) and, based on the second time (*t*₂), usage information of the battery 120, and/or other information (as described in further detail above), the charger control circuitry predicts a first available charging period 211, from a first time (*t*₁) to the second time (*t*₂). In predicting the first available charging period 211, the charger control circuitry 144 may identify that the charger control circuitry 144 does not, during one or more time intervals, have the capacity to charge the battery 120 (e.g., due to charging of other energy storage devices). Accordingly, the first available charging period 211 begins at the first time (*t*1) (rather than, e.g., the initial time (*t*₀)).

During a time interval starting at the initial time (*t*₀) and ending at the first time (*t*₁), the battery 120 is in neither a charging period or a discharging period, but, instead, a disuse period 212. As can be seen in FIG. 2A, the battery 120 loses a small amount of charge ("residual discharge") during the disuse period 212. In some examples, the battery 120 may experience residual discharge, even while not in use, due to, e.g., residual power loss, powering of battery systems (e.g., the battery sensors 122, the battery control circuitry 124, and/or the battery communications circuitry 126), and/or other causes. However, in some examples, the battery 120 may experience no residual discharge or substantially no residual discharge. In examples, rates of residual discharge experienced by the battery 120 may vary in proportion to rates of charging and discharging from the proportions depicted in FIG. 2A.

The charger control circuitry, based on usage information of the battery 120, determines a target SoC of the battery 120 associated with the second time (*t*₂). The charger control circuitry 144 also determines a first charging curve 202 to charge the battery 120 to the target SoC by the second time (*t*₂) (e.g., based on usage information of the battery 120, the available charging period 211, the target SoC, etc.). In some examples, the charger control circuitry 144 may utilize a charging curve which does not charge the battery 120 for an entirety of the first available charging period 211. For example, the first graph 210 depicts the first charging curve 202 as including a charging portion 202A during a first section 211A of the first available charging period 211, beginning at the first time (*t*₁) and ending at an end of charging time (*t*_{E}), and a non-charging portion 202B during a second section 211B of the first available charging period 211, beginning at the end of charging time (*t*_{E}) and ending at the second time (*t*₂). In the example of FIG. 2A, the first charging curve 202 accounts for residual discharge of the battery 120 by determining the charging portion 202A to charge the battery 120 to a percentage above the target SoC, such that the battery 120 is still at or above the target SoC by the second time (*t*₂). In other examples, the first charging curve 202 charges the battery 120 no higher than the target SoC. In the example of FIG. 2A, the first charging curve 202 includes charging at a constant rate of charging during the charging portion 202A. However, in other examples, a charging curve may include one or more non-constant rates of charging, such as one or more stepped rates of charging, one or more exponential rates of charging, one or more increasing rates of charging, one or more decreasing rates of charging, and/or one or more other varying rates of charging.

During a first discharging period 213 beginning at the second time (*t*₂) and ending at a third time (*t*₃), the battery 120 is in use and being discharged (e.g., in a welding operation to power either or both of the welding-type power supplies 110A, 110B). Because the battery 120 was charged to the target SoC by the second time (*t*₂), the battery 120 stored a sufficient amount of power for use during the first discharging period 213.

As an alternative and/or additional example, referring to FIG. 2B, a second graph 220 depicts a second example of a charge of the battery 120 over time (x-axis: time; y-axis: battery charge percentage). At the initial time (*t*₀), the charger control circuitry 144 receives or otherwise becomes communicatively coupled with the battery 120. The charger control circuitry 144 determines that the battery 120 will be needed for use (e.g., in a welding operation) at a fourth time (*t*₄) and, based on the fourth time (*t*₄), usage information of the battery 120, and/or other information (as described in further detail above), the charger control circuitry predicts a second available charging period 221, from the initial time (*t*₀) to the fourth time (*t*₄).

The charger control circuitry 144, based on the usage information of the battery 120, determines a target SoC of the battery 120 associated with the fourth time (*t*₄). In the example of FIG. 2B, the target SoC is determined based on a desired reserve charge (e.g., an amount of charge added to an amount of charge determined to be used during a second discharging period 222). Using a desired reserve charge when calculating a target SoC may account for potential errors in determination of an amount of power necessary for a welding operation, account for abnormalities in power usage of a welding operation, account for unpredicted durations and/or welding parameters of a welding operation, and/or otherwise provide a buffer for circumstances in which an amount of power estimated to be discharged during the second discharging period 222 is less than an actual amount of power necessary and/or used during the second discharging period 222.

The charger control circuitry 144 also determines a second charging curve 204 of the battery 120 to the target SoC by the fourth time (*t*₄) (e.g., based on usage information of the battery 120, the available charging period 221, the target SoC, etc.). The second charging curve 204 does not charge the battery 120 for an entirety of the second available charging period 221 and, instead, includes an interruption in charging. The second graph 220 depicts the second charging curve 204 as including a first charging portion 204A during a first section 221A of the second available charging period 221, beginning at the initial time (*t*₀) and ending at an interruption time (*t*_{I}), a non-charging portion 204B (e.g., an interruption) during a second section 221B of the second available charging period 221, beginning at the interruption time (*t*_{I}) and ending at a charging restart time (*t*_{R}), and a second charging portion 204C during a third section 221C of the second available charging period 221, beginning at the charging restart time (*t*_{R}) and ending at the fourth time (*t*₄). The charger control circuitry 144 may select a charging curve having one or more interruptions (e.g., one or more non-charging sections of an available charging period, such as the second section 221B) between two or more charging sections (e.g., the sections 221A, 221C) due to, e.g., charging needs of other energy storage devices, concern for an SoH of the battery 120, and/or one or more other reasons. In examples, a charging curve may have no interruptions, one interruption, or any plurality of interruptions. In examples, a charging curve may have one charging section or any plurality of charging sections.

In the example of FIG. 2B, the second charging curve 204 charges the battery 120 to a battery percentage above the target SoC by the fourth time (*t*₄), e.g., to account for potential differences between an estimated amount of charge and an actual amount of charge the battery 120 will have at the fourth time (*t*₄), to account for the second discharging period 222 beginning sooner than predicted, to account for residual discharging, etc. In examples, a charging curve may charge the battery 120 to a target SoC or to any amount or percentage of stored power above a target SoC.

In the example of FIG. 2B, the first charging portion 204A has a variable rate of charging while the second charging portion 204C has a constant rate of charging. In examples, a charging curve may have only one charging portion or any plurality of charging portions. In examples, one or more charging portions of a charging curve may vary from one or more other charging portions of the charging curve in being constant or variable, in rates of charging (e.g., differing constant rates of charging, differing rates of change of variable rates of charging, etc.), and/or in any other way.

During the second discharging period 222, beginning at the fourth time (*t*₄) and ending at a fifth time (*t*₅), the battery 120 is in use and being discharged (e.g., in a welding operation to power either or both of the welding-type power supplies 110A, 110B). Because the battery 120 was charged to the target SoC by the fifth time (*t*₅), the battery 120 stored a sufficient amount of power for use during the second discharging period 222.

Referring to FIGS. 2A and 2B, in some examples, rates of charging (e.g., rates of any, some, or all of the charging portions 202A, 204A, 204C) of an energy storage device according to a charging curve may vary from rates of charging depicted in FIGS. 2A and/or 2B when compared to, e.g., rates of discharging during discharging periods or residual discharging depicted in FIGS. 2A and/or 2B. In some examples, rates of discharging during a discharging (e.g., discharging rates during either or both of the discharging periods 213, 222) of an energy storage device may vary from rates of discharging depicted in FIGS. 2A and/or 2B when compared to, e.g., rates of charging or residual discharging depicted in FIGS. 2A and/or 2B. In some examples, residual discharge rates (e.g., residual discharge rates during any, some, or all of the sections 211B, 221B and/or the disuse period 212) of an energy storage device according to a charging curve may vary from residual discharging rates depicted in FIGS. 2A and/or 2B when compared to, e.g., rates of discharging during discharging periods or rates of charging depicted in FIGS. 2A and/or 2B.

Referring again to FIGS. 1A and 1B, in some examples, the charger control circuitry 144 determines a charging curve, e.g., by identifying one or more charging curves predicted (e.g., by the charger control circuitry 144) to charge the battery 120 to charge the battery 120 to a target SoC of the battery 120 based on one or more available charging periods of the battery 120 (e.g., by an end time of an available charging period of the battery 120).

In some examples, determining of a charging curve of the battery 120 by the charger control circuitry 144 may be further based on usage information of the battery 120. For example, faster rates of charging (e.g., charging with charging power having higher current magnitudes) may be more likely to damage an SoH of the battery 120. Accordingly, if the charger control circuitry 144 determines that the battery 120 has a poor SoH (e.g., compared to one or more threshold values of one or more SoH metrics), the charger control circuitry 144 may determine a charging curve for the battery 120 intended to reduce damage to an SoH of the battery 120 (e.g., by charging slowly and over a longer period of time).

In some examples, the charger control circuitry 144 selects a charging curve from a plurality of potential charging curves. In some examples, the charger control circuitry 144 may generate a plurality of generated charging curves. In some examples, the charger control circuitry 144 may access a plurality of predetermined charging curves, e.g., stored in a memory of the charger control circuitry 144 and/or in one or more other memories (e.g., a cloud database and/or computing system). In some examples, the charger control circuitry 144 may select a charging curve from a plurality of potential charging curves including one or more generated charging curves and/or one or more predetermined charging curves. In some examples, the charger control circuitry 144 may select a charging curve from a plurality of potential charging curves based on a comparison of an available duration of an available charging period of the battery 120 and one or more respective durations of one or more of the potential charging curves, e.g., to select a charging curve having a respective duration less than the duration of the available charging period of the battery 120 and having a difference from the duration of the available charging period less than differences of one or more other respective durations of one or more other potential charging curves. In some examples, the charger control circuitry 144 may select a charging curve from a plurality of potential charging curves based on usage information (e.g., SoH, maximum storage capacity, etc.) of the battery 120 and/or usage information of one or more other alternative energy storage devices. In some examples, the charger control circuitry 144 may select a charging curve from a plurality of potential charging curves based on one or more availabilities of one or more other energy storage devices (e.g., one or more alternative energy storage devices of a plurality of energy storage devices comprising the battery 120). In some examples, the charger control circuitry 144 may select a charging curve from a plurality of potential charging curves based on one or more first potential charging curves of the battery 120 and one or more second potential charging curves of one or more other energy storage devices (e.g., one or more alternative energy storage devices of a plurality of energy storage devices comprising the battery 120).

Once the charger control circuitry 144 has determined a charging curve for the battery 120, the battery charging system 140 can charge the battery 120 according to the charging curve. In some examples, the charger control circuitry 144 charges the battery 120 by controlling the charger power conversion circuitry 142 to charge the battery 120 according to the charging curve. In some examples, the charger control circuitry 144 charges the battery 120 by controlling one or more other power conversion circuitries (e.g., one or more power sources of the utility power source 130, the power input 111, the power supply power conversion circuitry 112, and/or the bidirectional DC-DC converter 117A) to charge the battery 120 according to the charging curve, e.g., generating and transmitting (e.g., via the charger communications circuitry 146) a control signal to one or more other control circuitries (e.g., the power supply control circuitry 114, receiving the control signal via the power supply communications circuitry 116). In some examples, the charger control circuitry 144 charges the battery 120 by controlling the charger power conversion circuitry 142 and/or one or more other power conversion circuitries to charge the battery 120 according to the charging curve.

In some examples, the charger control circuitry 144 may predict one or more available charging periods of the battery 120 based on one or more data points of any, some, or all of the types of usage data described herein. In some examples, the charger control circuitry 144 may determine one or more SoCs of the battery 120 based on one or more data points of any, some, or all of the types of usage data described herein. In some examples, the charger control circuitry 144 may determine one or more charging curves of the battery 120 based on one or more data points of any, some, or all of the types of usage data described herein.

In some examples, usage information may include one or more load characteristics of the battery 120. A load characteristic is usage information identifying one or more loads on the battery 120 (e.g., measured in volts, amps, hertz, etc.). A duty cycle may be associated with one or more timestamps, with one or more discharging periods (e.g., one or more past discharging periods and/or future discharging periods) and/or with one or more portions of one or more discharging periods. A load characteristic may be, e.g., one or more average loads on the battery 120 (e.g., over the course of a portion of and/or all of one or more discharging periods), one or more peak loads on the battery 120 (e.g., over the course of a portion of and/or all of one or more discharging periods), and/or a load on the battery 120 as a function of time (e.g., between a start time and an end time of timestamps associated with a discharging period with which the duty cycle is associated).

In some examples, usage information may include one or more duty cycles of the battery 120. A duty cycle is usage information identifying one or more cycles of loads on the battery 120. A duty cycle may be associated with one or more timestamps, with one or more discharging periods (e.g., one or more past discharging periods and/or future discharging periods), and/or with one or more portions of one or more discharging periods.

In some examples, usage information may include one or more average discharge rates of the battery 120. An average discharge rate is usage information identifying an average rate at which power was and/or is indicated to be discharged from the battery 120 over the course of a time period. An average discharge rate may be associated with one or more timestamps, with one or more discharging periods of the battery 120 (e.g., one or more past discharging periods and/or one or more future discharging periods), with one or more duty cycles of the with one or more portions of one or more discharging periods (e.g., one or more duty cycles), with one or more disuse periods of the battery 120 (e.g., one or more past disuse periods and/or one or more future disuse periods), and/or with one or more portions of one or more disuse periods (e.g., as an idle rate of power drain of the battery 120). In examples, an average discharge rate may be indicated and/or defined by two or more SoCs of the battery 120 at two or more timestamps. For example, an average discharge rate of a discharging period of the battery 120 may be defined, in part, by a first SoC of the battery 120 at a start time of the discharging period, a second SoC of the battery 120 at an end time of the discharging period, and a magnitude of time between the start time and the end time of the discharging period.

In some examples, usage information may include one or more peak discharge rates of the battery 120. A peak discharge rate is usage information identifying a peak rate at which power was and/or is indicated to be discharged from the battery 120 over the course of a time period. A peak discharge rate may be associated with one or more timestamps, with one or more discharging periods of the battery 120 (e.g., one or more past discharging periods and/or one or more future discharging periods), and/or with one or more portions of one or more discharging periods (e.g., one or more duty cycles). In examples, a peak discharge rate may be indicated and/or defined by two or more SoCs of the battery 120 at two or more timestamps. For example, a peak discharge rate of the battery 120 during a discharging period may be defined using a plurality of SoCs, each being associated with one timestamp at or between a start time and an end time of the discharging period, by identifying two subsequent timestamps having the greatest difference between the respective SoC associated with each and determining a discharge rate (i.e., the peak discharge rate) between the two timestamps.

In some examples, usage information may include one or more discharging quantities of the battery 120. A discharging quantity is usage information identifying an amount of stored power (e.g., in kWh, as a percentage of a maximum storage capacity, etc.) discharged from the battery 120 over the course of a time period. A discharging quantity may be associated with one or more timestamps, with one or more discharging periods of the battery 120 (e.g., one or more past discharging periods and/or one or more future discharging periods), with one or more portions of one or more discharging periods (e.g., one or more duty cycles), with one or more disuse periods of the battery 120 (e.g., one or more past disuse periods and/or one or more future disuse periods), and/or with one or more portions of one or more disuse periods (e.g., as an amount of idle power drain of the battery 120). In examples, a discharging quantity may be indicated and/or defined by two or more SoCs of the battery 120 at two or more timestamps.

In some examples, usage information may include one or more quantities of charging cycles of the battery 120. A quantity of charging cycles is usage information identifying an amount of times (if any) that the battery 120 has charged to a maximum storage capacity of the battery 120 (e.g., a total energy charge) and/or that the battery 120 has charged to another pre-determined amount of power. A quantity of charging cycles may be associated with a lifespan of the battery 120. A quantity of charging cycles may be associated with one or more other time periods of the battery 120. A quantity of charging cycles may be associated with one or more timestamps, with one or more with one or more charging periods of the battery 120 (e.g., one or more past charging periods and/or one or more future charging periods), and/or with one or more portions of one or more charging periods.

In some examples, usage information may include one or more quantities of discharging cycles of the battery 120. A quantity of discharging cycles is usage information identifying an amount of times (if any) that the battery 120 has discharged an entirety of power stored by the battery 120 (e.g., a total energy discharge) and/or that the battery 120 has discharged another pre-determined amount of power stored by the battery 120. A quantity of discharging cycles may be associated with a lifespan of the battery 120. A quantity of discharging cycles may be associated with one or more timestamps, with one or more with one or more discharging periods of the battery 120 (e.g., one or more past discharging periods and/or one or more future discharging periods), with one or more portions of one or more discharging periods (e.g., one or more duty cycles), with one or more disuse periods of the battery 120 (e.g., one or more past disuse periods and/or one or more future disuse periods), with one or more portions of one or more disuse periods, and/or with one or more other time periods.

In some examples, usage information may include one or more discharging frequencies of the battery 120. A discharging frequency is usage information identifying a frequency of discharging periods of the battery 120 over the course of a time period. A discharging frequency may be associated with a lifespan of the battery 120. A discharging frequency may be associated with one or more other time periods of the battery 120 (e.g., one or more charging periods, one or more discharging periods, and/or one or more disuse periods). A discharging frequency may be associated with one or more timestamps, with one or more with one or more discharging periods of the battery 120 (e.g., one or more past discharging periods and/or one or more future discharging periods), with one or more portions of one or more discharging periods (e.g., one or more duty cycles), with one or more disuse periods of the battery 120 (e.g., one or more past disuse periods and/or one or more future disuse periods), and/or with one or more portions of one or more disuse periods.

In some examples, usage information may include one or more charging frequencies of the battery 120. A charging frequency is usage information identifying a frequency of charging periods of the battery 120 over the course of a time period. A charging frequency may be associated with a lifespan of the battery 120. A charging frequency may be associated with one or more timestamps, with one or more charging periods of the battery 120, and/or with one or more other time periods of the battery 120.

In some examples, usage information may include state of health ("SoH") information of the battery 120. SoH information is usage information indicating a remaining lifetime quantity of an SoH metric (e.g., a metric of performance of the battery 120). The charger control circuitry 144 may determine SoH information based on one or more data points of any, some, or all of the other types of usage information described herein. Using usage information of the battery 120, the charger control circuitry 144 may determine a remaining lifetime quantity of an SoH metric based on one or more initial values (e.g., values determined, estimated, and/or measured at the time of manufacturing of the battery 120, default values, factory settings, values set by a user or a control circuitry, etc.) and one or more later values (e.g., values determined, estimated, and/or measured at the present time or at a time of an associated timestamp) of an SoH metric of the battery 120.

The remaining lifetime quantity of the battery 120 represents a quantity of the SoH metric that the battery 120 is estimated to undergo and/or perform before the battery 120 reaches a predetermined end-of-lifetime condition. The predetermined end-of-lifetime condition may be a threshold value of selected SoH metric and/or a combination of one or more threshold values of a plurality of SoH metrics. In some examples, the battery 120 may have a plurality of predetermined end-of-lifetime conditions. In some examples, the predetermined end-of-lifetime condition is a default and/or factory-selected value. In some examples, the predetermined end-of-lifetime condition may be adjusted by the operator based on the preferences of the operator for lowest acceptable battery capacity.

SoH metrics may include one or more values (e.g., an initial value and one or more estimated, measured, and/or determined values) of any, some, or all of a maximum storage capacity of the battery 120 (measured in, e.g., kWh), an estimated quantity of remaining charging cycles of the battery 120 (e.g., quantities of total energy charges), an estimated quantity of remaining charging periods of the battery 120, an estimated quantity of remaining discharging cycles of the battery 120 (e.g., quantities of total energy discharges), an estimated quantity of discharging periods of the battery 120, one or more remaining quantities of one or more predetermined events of the battery 120 (e.g., charging periods, discharging periods, duty cycles, times discharging more than a threshold discharge current, times charging more than a threshold charging current, times charging at a temperature above a threshold charging temperature, times discharging at a temperature above a threshold discharging temperature, etc.), one or more durations of one or more pre-determined conditions of the battery 120 (e.g., a magnitude of time charging, a magnitude of time discharging, a magnitude of time discharging more than a threshold discharge current, a magnitude of time charging more than a threshold current, a magnitude of time discharging at a temperature above a threshold discharging temperature, a magnitude of time charging at a temperature above a charging temperature), a quantity of inactivated battery cells of the battery 120, a quantity of activated cells of the battery 120, and/or one or more other types of information of the battery 120 that may affect battery life of the battery 120.

A remaining lifetime quantity of an SoH metric may, e.g., include a quantity of remaining charging cycles of the battery 120, a quantity of remaining charging periods of the battery 120, a quantity of remaining discharging cycles of the battery 120, a quantity of remaining discharging periods of the battery 120, one or more quantities of one or more remaining predetermined events of the battery 120, one or more durations of one or more pre-determined condition of the battery 120, and/or one or more other estimations. In some examples, the charger control circuitry 144 may determine a remaining lifetime quantity of an SoH metric by calculating the difference (e.g., as a percentage) between an initial value and a later value of a metric of performance of the battery 120. In some examples, a remaining lifetime quantity of an SoH metric may be estimated by accessing one or more lifetime curves of the battery 120. The lifetime curve may, e.g., be based on one or more of a measured and/or determined maximum storage capacity of the battery 120, a quantity of previous charging cycles of the battery 120, a quantity of previous charging periods of the battery 120, a quantity of previous discharging cycles of the battery 120, a quantity of previous discharging periods of the battery 120, one or more quantities of one or more previous predetermined events of the battery 120, one or more durations of one or more pre-determined conditions of the battery 120, a number of inactivated battery cells of the battery 120, a number of activated battery cells of the battery 120, and/or any, some, or all usage information of the battery 120. In some examples, the charger control circuitry 144 compares usage information of the battery 120 to performance of the battery 120 (e.g., as measured by the one or more battery sensors 122) during use (e.g., a welding operation conducted using the battery 120) to estimate a remaining lifetime quantity of an SoH metric of the battery 120. For example, the charger control circuitry 144 may compare an expected charge capacity of the battery 120 based on the usage information to the actual charge capacity observed on the battery 120 during usage of the battery 120. In addition to or as an alternative to determining a remaining lifetime quantity of an SoH metric, the charger control circuitry 144 may estimate a remaining lifetime upper limit and/or a remaining lifetime lower limit of an SoH metric.

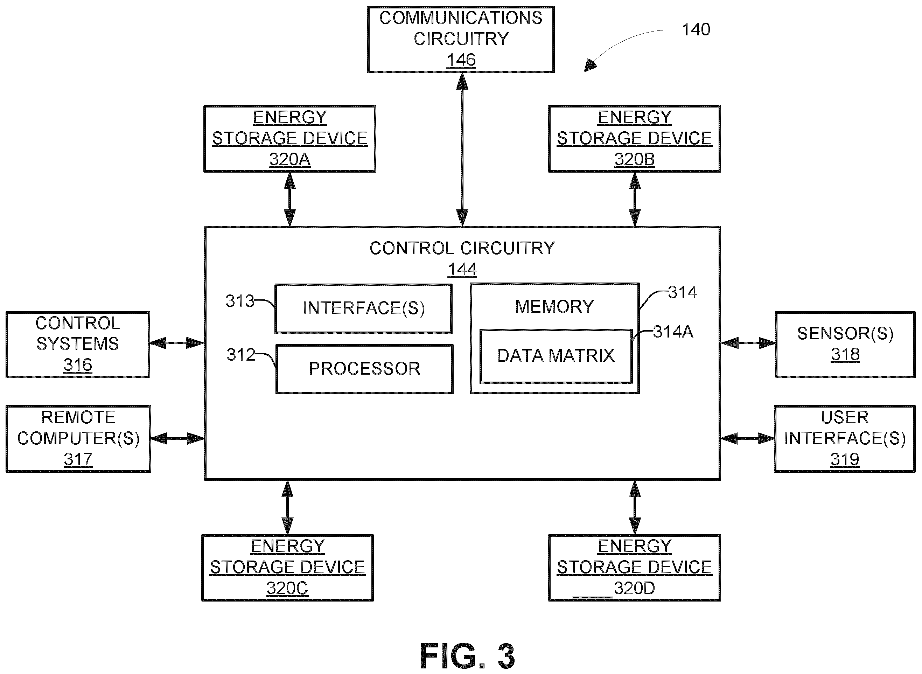

FIG. 3 is a block diagram of an example of the battery charging system 140. The example of the charger control circuitry 144 of FIG. 3 may include a processor 312 (e.g., one processor and/or any plurality of processors), to perform as a programmable logic circuit, a system-on-chip, a programmable logic device, and/or any other type of logic circuit. The example of the charger control circuitry 144 may, additionally and/or alternatively, be implemented, e.g., as any, some, or all of either or both of the control circuitries 114, 124, as control circuitry of the utility power source 130, and/or as one or more other control circuitries and/or computing devices, as may be described elsewhere herein.

In some examples, the charger control circuitry 144 includes a memory storage device 314 (e.g., one energy storage device or any plurality of energy storage devices). For example, any, some, or all of information used for determining charging schedules, predicting one or more available charging periods, determining one or more target SoCs, determining one or more charging curves, and other processes described herein can be stored in a data matrix 314A, e.g., as a chart, a library, etc., within the memory storage device 314. For example, the memory storage device 314 may store any, some, or all of usage information of the battery 120 and/or of one or more other energy storage devices, charging information of the battery 120 and/or of one or more other energy storage devices, charging information of a power source for charging of the battery 120 and/or the battery charging system 140 (e.g., the power input 111, the utility power source 130, and/or the charger power conversion circuitry 142), scheduling information of the battery 120, of one or more other energy storage devices, and/or of one or more other devices and/or systems (e.g., either or both of the welding-type systems 100A, 100B), one or more SoH metrics of the battery 120 and/or of one or more other energy storage devices, one or more SoCs of the battery 120 and/or of one or more other energy storage devices, one or more parameters of one or more power outputs of the battery 120 and/or of one or more other energy storage devices, one or more parameters of one or more charging outputs delivered to the battery 120 and/or one or more other energy storage devices, one or more locations of the battery 120 and/or of one or more other energy storage devices, one or more coupling states of the battery 120 and/or of one or more other energy storage devices, one or more predetermined charging curves of the battery 120 and/or of one or more other energy storage devices, and/or one or more other types of information of and/or about either or both of the welding-type power supplies 110A, 110B, the battery 120 and/or of one or more other energy storage devices, the utility power source 130, and/or the battery charging system 140.

In some examples, the charger control circuitry 144 receives and/or sends commands (e.g., as one or more control signals) to or from one or more control systems 316. The one or more control systems 316 may be or include, e.g., any, some, or all of the control circuitries 114, 124, 144, a control circuitry of the utility power source 130, and/or one or more other control circuitries and/or computing devices, as may be described elsewhere herein.

In some examples, the battery charging system 140 may include one or more remote computers 317 (e.g., one or more remote controls, one or more laptops, one or more smartphones, one or more additional and/or remote control circuitries, one or more remote cloud computing systems, one or more additional and/or remote processors, one or more additional and/or remote memory storage devices, etc.). The one or more remote computers 317 may be or include, e.g., a management system of the battery 120 and/or of one or more other energy storage devices, any, some, or all of the control circuitries 114, 124, 144, a control circuitry of the utility power source 130, and/or one or more other control circuitries and/or computing devices, as may be described elsewhere herein. Any data processing described herein as being conducted by the charger control circuitry 144 may, additionally and/or alternatively, be conducted, in whole and/or in part, by one and/or any plurality of the remote computers 317. Any data described herein as being used by the charger control circuitry 144 and/or stored in the memory storage device 314 may, additionally and/or alternatively, be stored, in whole and/or in part, in one and/or any plurality of the remote computers 317.

In some examples, the battery charging system 140 can include and/or use one or more sensors 318. The sensors 318 may, e.g., include the one or more battery sensors 122 of the battery 120, sensors for locating, coupling to, detecting, and/or otherwise measuring one or more states, one or more qualities, one or more outputs, and/or one or more aspects of the battery 120, sensors of either or both of the welding-type systems 100A, 100B, the utility power source 130, and/or one or more other sensors, as described elsewhere herein. In examples, the sensors 318 may comprise any, some, or all of one or more pressure sensors, one or more weight sensors (e.g., a scale), one or more imaging sensors (e.g., a camera), one or more voltmeters, one or more current sensors, one or more electromagnetic field ("EMF") sensors, one or more spectrographic sensors, one or more lasers or other wave-based sensors, and/or one or more other sensors.

In some examples, the battery charging system 140 can include one or more user interfaces 319 (e.g., one or more computer input devices, one or more switches, one or more knobs, one or more dials, one or more smartphones, one or more monitors and/or screens, one or more touchscreens, and/or one or more other user-manipulatable devices which may generate an input signal) to provide options for an operator to, e.g., input one or more input values (relating to, e.g., usage information, charging information, scheduling information, SoC metrics, etc.), view and/or select one or more charging curves and/or charging schedules, and/or control any, some, or all of the battery charging system 140, either or both of the welding-type systems 100A, 100B and/or one or more components thereof, and/or one or more other devices and/or systems. One or more of the user interfaces 319 can be configured as a display with integrated touch screen capabilities, or reflect changes made via a separate knob, remote, wireless commands, etc. In some examples, one or more of the user interfaces 319 displays sections with selectable or otherwise manipulatable fields (i.e., "input fields") such that a user may, e.g., input (e.g., by inputting a number, by selecting an item from a drop-down menu, etc.) one or more input values (e.g., indicated in the section as being associated with one or more types of charging information, usage information, scheduling information, and/or one or more other types of information) and/or view and/or select one or more selections predicted, generated, and/or determined by the battery charging system 140 (e.g., one or more charging schedules, one or more available charging periods, one or more target SoCs, one or more charging curves, and/or one or more other selections). For example, rather than determine only a single selection (e.g., only one charging schedule, only one available charging period, only one target SoC, only one charging curve, and/or only one of one or more other selection types), the battery charging system 140 may, in some examples, generate, predict, and/or determine one or more charging schedules, one or more available charging periods, one or more target SoCs, one or more charging curves, and/or one or more other selections for selection (e.g., by a user using one or more of the user interfaces 319).

In some examples, one or more of the user interfaces 319 may be used to receive inputs (e.g., from one or more users, generated by one or more control circuitries, etc.) regarding, e.g., any, some, or all of usage information of the battery 120 and/or of one or more other energy storage devices, charging information of the battery 120 and/or of one or more other energy storage devices, scheduling information of the battery 120, of one or more other energy storage devices, and/or of one or more other devices and/or systems (e.g., either or both of the welding-type systems 100A, 100B), one or more SoH metrics of the battery 120 and/or of one or more other energy storage devices, one or more SoCs of the battery 120 and/or of one or more other energy storage devices, one or more parameters of one or more power outputs of the battery 120 and/or of one or more other energy storage devices, one or more parameters of one or more charging outputs delivered to the battery 120 and/or one or more other energy storage devices, one or more locations of the battery 120 and/or of one or more other energy storage devices, one or more coupling states of the battery 120 and/or of one or more other energy storage devices, one or more predetermined charging curves of the battery 120 and/or of one or more other energy storage devices, one or more available charging periods of the battery 120 and/or of one or more other energy storage devices, one or more target SoCs of the battery 120 and/or of one or more other energy storage devices, and/or one or more other types of information of and/or about either or both of the welding-type power supplies 110A, 110B, the battery 120 and/or of one or more other energy storage devices, the utility power source 130, and/or the battery charging system 140.

In the example of FIG. 3, the battery charging system 140 is coupled to a first energy storage device 320A, a second energy storage device 320B, a third energy storage device 320C, and a fourth energy storage device 320D. In other examples, the battery charging system 140 may be coupled to one energy storage device or any plurality of energy storage devices.

In some examples, the charger control circuitry 144 conducts all data processing (e.g., of input values and/or input signals) involved in charging energy storage devices. In some examples, any, some, or all data processing involved in charging energy storage devices (e.g., determining charging schedules, predicting one or more available charging periods, determining one or more target SoCs, and/or determining one or more charging curves) may be conducted, implemented, and/or assisted, in whole or in part, by the charger control circuitry 144, the power supply control circuitry 114, the battery control circuitry 134, control circuitry of the utility power source 130, one or any plurality of the remote computers 317, and/or one or more other control circuitries. For example, any, some, or all data processing involved in charging energy storage devices may be partially or wholly conducted on a smartphone (e.g., by an application), by one or more remote computing devices (e.g., a cloud computing system), using one or more remote memory storage devices (e.g., a cloud database and/or one or more memory storage devices of one or more remote computing devices), and/or by any one or plurality of computing systems and/or control circuitries.

In some examples, the charger control circuitry 144 stores all data (e.g., usage information, scheduling information, charging information, SoH metrics, etc.) used in charging energy storage devices (e.g., determining charging schedules, predicting one or more available charging periods, determining one or more target SoCs, and/or determining one or more charging curves) in the memory storage device 314. In some examples, any, some, or all data used in charging energy storage devices may be stored in the memory storage device 314 of the charger control circuitry 144, in a memory storage device of the power supply control circuitry 114, in a memory storage device of the battery control circuitry 124, in one memory storage device and/or any plurality of memory storage devices of one and/or any plurality of the remote computers 317, and/or in one or more memory storage devices of one or more other control circuitries. For example, any, some, or all data used in charging energy storage devices may be partially or wholly stored on a smartphone (e.g., in an application), on one or more remote computing devices (e.g., a cloud computing system), on remote memory devices (e.g., a cloud database and/or one or more memory storage devices of one or more remote computing devices), and/or by any one or plurality of computing systems and/or control circuitries.

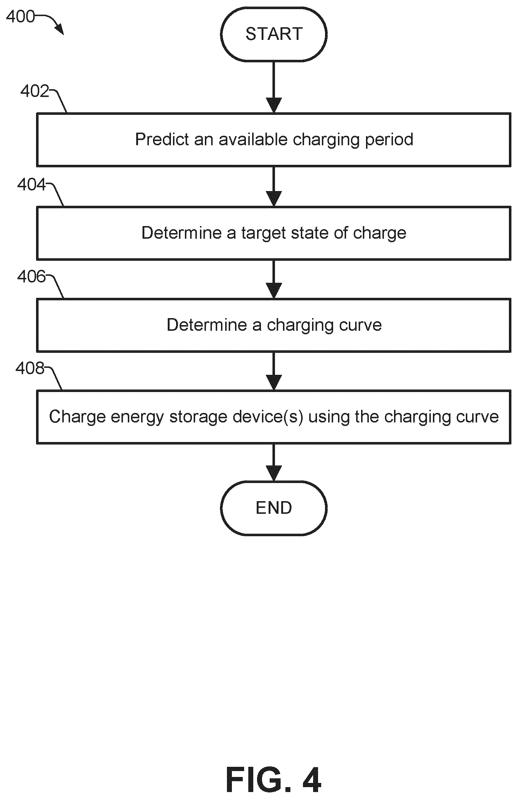

FIG. 4 is a flowchart illustrating an example method 400 of operating the battery charging system 140 to generate, predict, determine, and/or implement some or all of a charging schedule of the battery 120 and/or of one or more other energy storage devices (e.g., any, some, or all of the energy storage devices 320A, 320B, 320C, 320D). The method 400 (and/or one or more steps thereof) may be implemented by the charger control circuitry 144 and/or one or more other control circuitries (e.g., either or both of the control circuitries 114, 124, one or more control circuitries of one or more of the remote computers 317, and/or one or more other control circuitries) by executing machine-readable instructions, e.g., stored on a non-transitory machine-readable storage device (e.g., the memory storage device 314, one or more memory storage devices of either or both of the control circuitries 114, 124, one or more memory storage devices of one or more of the remote computers 317, and/or one or more other memory storage devices). In describing the method 400, reference will be made to the examples of FIGS. 1A, 1B, and 3. However, the method 400 may be used with other examples, such as alternative examples described elsewhere herein.

In some examples, the method 400 may initiate upon coupling of the battery 120 to the battery charging system 140. In some examples, the method 400 may initiate upon the occurrence of one or more additional and/or alternative events (i.e., "initiation events"), such as connection of one or more alternative energy storage devices to the battery charging system 140 (e.g., prompting a potential redetermining of a charging schedule of the battery 120), input (e.g., via one or more of the user interfaces 319) and/or generation (e.g., estimation, prediction, and/or determination by the charger control circuitry 144 and/or sensing by one or more of any, some, or all of the sensors 122, 318) of one or more input values relating to the battery 120, a power source of the battery 120 and/or the battery charging system 140, and/or either or both of the welding-type systems 100A, 100B (e.g., usage information, scheduling information, charging information, SoC metrics, and/or one or more other types of information), and/or one or more other initiation events (e.g., the occurrence of one initiation event, the simultaneous and/or cumulative occurrence of a plurality of initiation events, etc.).

At block 402, the charger control circuitry 144 predicts an available charging period of the battery 120. In examples, the charger control circuitry 144 predicts the available charging period of the battery 120 based on usage information of the battery 120 (e.g., one or more charging periods of the battery 120, one or more discharging periods of the battery 120, one or more disuse periods of the battery 120, SoH information of the battery 120, and/or one or more other types of usage information of the battery 120). In some examples, the charger control circuitry 144 predicts the available charging period of the battery 120 based on usage information of the battery 120 and one or more other types of information of the battery 120 (e.g., charging information, scheduling information, SoC metrics, and/or one or more other types of information), one or more types of information of one or more alternative energy storage devices (e.g., the energy storage devices 320A, 320B, 320C, 320D) of a plurality of energy storage devices comprising the battery 120 (e.g., availability, usage information, charging information, scheduling information, SoC metrics, and/or one or more other types of information), and/or one or more types of information of either or both of the welding-type power supplies 110A, 110B, the utility power source 130, and/or one or more other systems and/or devices (e.g., scheduling information, charging information, and/or one or more other types of information). In some examples, the charger control circuitry 144 predicts a plurality of available charging periods of the battery 120 (e.g., for charging of the battery 120 by an end time of a last available charging period of the plurality of available charging periods and/or for selection via one or more of the user interfaces 319). In some examples, the charger control circuitry 144 predicts one or more available charging periods of the battery 120 and one or more available charging periods of one or more other energy storage devices (e.g., one or more of the energy storage devices 320A, 320B, 320C, 320D).

In some examples, the usage information and/or one or more other types of information of the battery 120 is stored in a management system of the battery 120. In some such examples, a battery management system of the battery 120 is stored on one or more memory storage devices of the battery control circuitry 124, the memory storage device 314, one or more memory storage devices of the power supply control circuitry 114, one or more memory storage devices of one or more of the remote computers 317, and/or one or more other memory storage devices. In some examples, the usage information and/or one or more other types of information of one or more alternative energy storage devices (e.g., the energy storage devices 320A, 320B, 320C, 320D) of a plurality of energy storage devices comprising the battery 120 are stored in one or more management systems of the one or more alternative energy storage devices, e.g., stored on one or more memory storage devices of the one or more alternative energy storage devices, the memory storage device 314, one or more memory storage devices of the power supply control circuitry 114, one or more memory storage devices of one or more of the remote computers 317, and/or one or more other memory storage devices). In some examples, the charger control circuitry 144 accesses the usage information using the charger communications circuitry 146.

In some examples, predicting one or more available charging periods of one or more energy storage devices includes manipulating (e.g., by conducting a several-step manipulation of data to, e.g., identify trends in historical usage data) and/or conducting calculations using tens, hundreds, or even thousands of data points of usage information of one energy storage device or a plurality of energy storage devices (e.g., 4 or more energy storage devices, 10 or more energy storage devices, 25 or more energy storage devices, or even 50 or more energy storage devices). Further, in some examples, after predicting one or more available charging periods of one or more energy storage devices, the charger control circuitry 144 conducts one or more re-calculations and/or modifications of one or more of the one or more available charging periods based on additions, changes, and/or modifications to information used in the initial manipulation and/or calculations to predict the one or more available charging periods. For example, a re-prediction of one or more of the one or more available charging periods may be triggered by modification (e.g., by any, some, or all of the control circuitries 114, 124, 144, one or more other control circuitries, the user interface 115, one or more of the user interfaces 319, one or more other user interfaces, etc.) of and/or a receipt (e.g., via an input signal received by the charger communications circuitry 146, by the charger control circuitry 144 identifying a change in data in the memory storage device 314 and/or in data accessed by the charger communications circuitry 146, etc.) of a change in usage information of one or more of the one or more energy storage devices, scheduling information of one or more of the one or more energy storage devices and/or of one or more other devices or systems (e.g., either or both of the welding-type power supplies 110A, 110B), receiving new and/or modified charging information of one or more of the one or more energy storage devices and/or of one or more power sources for charging the one or more energy storage devices (e.g., the hybrid welding-type power supply 110A, the utility power source 130, and/or one or more other power sources), a change in a quantity of power sources for charging the one or more energy storage devices, a change in availability of one or more power sources for charging the one or more energy storage devices, a change in type of one or more power sources for charging the one or more energy storage devices, a change in quantity of the one or more energy storage devices and/or of one or more alternative energy storage devices, a change in availability of the one or more energy storage devices and/or of one or more alternative energy storage devices, and/or one or more other changes, additions, and/or modifications to data that the charger control circuitry 144 may use in predicting one or more available charging periods. Accordingly, the charger control circuitry 144 may predict one or more available charging periods of one or more energy storage devices with usage of more data points and/or types than could conceivably be used for calculations and/or modifications performed by a human mind and/or with a pencil and paper, in larger volumes than could conceivably be performed by the human mind and/or with a pencil and paper, and/or at more frequent time intervals than could conceivably be performed by the human mind and/or with a pencil and paper. Further, the charger control circuitry 144 may provide superior prediction of one or more available charging periods of one or more energy storage devices than possible by human workers, thereby, e.g., improving reliability of timely energy storage device availability for welding operations (e.g., by more accurately estimating a time at which one or more energy storage devices will be necessary for use), maintaining, increasing, maximizing, and/or limiting a reduction of uniformity of SoH across a plurality of energy storage devices (e.g., by providing greater available charging periods to energy storage devices having worse SoH), decreasing a reduction in SoH to one or more energy storage devices caused by charging (e.g., by charging the one or more energy storage devices more slowly and/or over longer periods of time), decreasing power consumption involved in the charging of the one or more energy storage devices (e.g., by charging the one or more energy storage devices more slowly and/or over longer periods of time), and/or reducing inefficiencies caused by human error, charging schedules, unplanned welding operations or other uses of the one or more energy storage devices.

At block 404, the charger control circuitry 144 determines a target SoC of the battery 120. In examples, the charger control circuitry 144 determines the target SoC of the battery 120 based on usage information of the battery 120. In some such examples, the charger control circuitry 144 determines the target SoC of the battery 120 based on one or more discharging periods of the battery 120, one or more duty cycles of the battery 120, one or more average discharge rates of the battery 120, one or more peak discharge rates of the battery 120, one or more discharging quantities of the battery 120, one or more total energy discharges of the battery 120, one or more discharging frequencies of the battery 120, one or more load characteristics of the battery 120, one or more predicted durations of one or more subsequent discharge periods of the battery 120, one or more predicted energy amounts of one or more subsequent discharge periods of the battery 120, and/or one or more other types of information of the battery 120. In some examples, the charger control circuitry 144 determines the target SoC of the battery 120 based on usage information of the battery 120 and one or more other types of information of the battery 120 (e.g., charging information, scheduling information, SoC metrics, and/or one or more other types of information), one or more types of information of one or more alternative energy storage devices (e.g., the energy storage devices 320A, 320B, 320C, 320D) of a plurality of energy storage devices comprising the battery 120 (e.g., availability, usage information, charging information, scheduling information, SoC metrics, and/or one or more other types of information), and/or one or more types of information of either or both of the welding-type power supplies 110A, 110B, the utility power source 130, and/or one or more other systems and/or devices (e.g., scheduling information, charging information, and/or one or more other types of information). In some examples, the charger control circuitry 144 determines a plurality of target SoCs of the battery 120 (e.g., for selection via one or more of the user interfaces 319). In some examples, the charger control circuitry 144 determines one or more target SoCs of the battery 120 and one or more target SoCs of one or more other energy storage devices (e.g., one or more of the energy storage devices 320A, 320B, 320C, 320D). In some such examples, a target SoC for the battery 120 may be selected via one or more of the user interfaces 319 and/or one or more other user interfaces from a plurality of target SoCs determined at the block 404.

In some examples, determining one or more target SoCs of one or more energy storage devices includes manipulating (e.g., by conducting a several-step manipulation of data to, e.g., identify trends in historical usage data) and/or conducting calculations using tens, hundreds, or even thousands of data points of usage information of one energy storage device or a plurality of energy storage devices (e.g., 4 or more energy storage devices, 10 or more energy storage devices, 25 or more energy storage devices, or even 50 or more energy storage devices). Further, in some examples, after determining one or more target SoCs of one or more energy storage devices, the charger control circuitry 144 conducts one or more re-calculations and/or modifications of one or more of the one or more target SoCs based on additions, changes, and/or modifications to information used in the initial manipulation and/or calculations to determine the one or more target SoCs. For example, a re-determination of one or more of the one or more target SoCs may be triggered by modification (e.g., by any, some, or all of the control circuitries 114, 124, 144, one or more other control circuitries, the user interface 115, one or more of the user interfaces 319, one or more other user interfaces, etc.) of and/or a receipt (e.g., via an input signal received by the charger communications circuitry 146, by the charger communications circuitry 146 identifying a change in data in the memory storage device 314 and/or in data accessed by the charger communications circuitry 146, etc.) of a change in usage information of one or more of the one or more energy storage devices, scheduling information of one or more of the one or more energy storage devices and/or of one or more other devices or systems (e.g., either or both of the welding-type power supplies 110A, 110B), receiving new and/or modified charging information of one or more of the one or more energy storage devices and/or of one or more power sources for charging the one or more energy storage devices (e.g., the hybrid welding-type power supply 110A, the utility power source 130, and/or one or more other power sources), a change in a quantity of power sources for charging the one or more energy storage devices, a change in availability of one or more power sources for charging the one or more energy storage devices, a change in type of one or more power sources for charging the one or more energy storage devices, a change in quantity of the one or more energy storage devices and/or of one or more alternative energy storage devices, a change in availability of the one or more energy storage devices and/or of one or more alternative energy storage devices, and/or one or more other changes, additions, and/or modifications to data that the charger control circuitry 144 may use in determining one or more target SoCs. Accordingly, the charger control circuitry 144 may determine one or more target SoCs of one or more energy storage devices with usage of more data points and/or types than could conceivably be used for calculations and/or modifications performed by a human mind and/or with a pencil and paper, in larger volumes than could conceivably be performed by the human mind and/or with a pencil and paper, and/or at more frequent time intervals than could conceivably be performed by the human mind and/or with a pencil and paper. Further, the charger control circuitry 144 may provide superior determination of one or more target SoCs of one or more energy storage devices than possible by human workers, thereby, e.g., improving reliability of one or more energy storage devices having sufficient SoC prior to one or more welding operations, maintaining, increasing, maximizing, and/or limiting a reduction of uniformity of SoH across a plurality of energy storage devices (e.g., by reducing a total amount of charging of one or more energy storage devices to a lower, more optimized target SoC), decreasing a reduction in SoH to one or more energy storage devices caused by charging (e.g., by reducing a total amount of charging of one or more energy storage devices to a lower, more optimized target SoC), decreasing power consumption involved in the charging of the one or more energy storage devices (e.g., by reducing a total amount of charging of one or more energy storage devices to a lower, more optimized target SoC), and/or reducing inefficiencies caused by human error, charging schedules, unplanned welding operations or other uses of the one or more energy storage devices.

At block 406, the charger control circuitry 144 determines a charging curve of the battery 120. In some examples, the charging curve is configured (e.g., estimated, predicted, etc.) to charge the battery 120 to the target SoC (e.g., determined in the step of the block 404) by an end time of an available charging period (e.g., predicted in the step of the block 402) of the battery 120. In some examples, the charger control circuitry 144 determines a charging curve of the battery 120 based on a target SoC of the battery 120 (e.g., determined by the battery 120), one or more available charging periods of the battery 120, usage information of the battery 120, and/or other information of the battery 120. In some examples, the charger control circuitry 144 determines a charging curve of the battery 120 by calculating a charging curve based on a target SoC of the battery 120 (e.g., determined by the battery 120), one or more available charging periods of the battery 120, usage information of the battery 120, and/or other information of the battery 120. In some examples, the charger control circuitry 144 determines a charging curve of the battery 120 by selecting a charging curve from a plurality of potential charging curves. In some such examples, each potential charging curve of the plurality of charging curves is associated with one or more respective durations and the charger control circuitry 144 selects the charging curve based on one or more available durations (e.g., determined by the charger control circuitry 144 in the step of the block 402) of one or more available charging periods of the battery 120. In some examples, the charger control circuitry 144 determines a plurality of charging curves of the battery 120 (e.g., for selection via one or more of the user interfaces 319). In some examples, the charger control circuitry 144 determines one or more charging curves of the battery 120 and one or more charging curves of one or more other energy storage devices (e.g., one or more of the energy storage devices 320A, 320B, 320C, 320D).

In some examples, determining one or more charging curves of one or more energy storage devices includes manipulating (e.g., by conducting a several-step manipulation of data to, e.g., identify trends in historical usage data) and/or conducting calculations using tens, hundreds, or even thousands of data points of usage information of one energy storage device or a plurality of energy storage devices (e.g., 4 or more energy storage devices, 10 or more energy storage devices, 25 or more energy storage devices, or even 50 or more energy storage devices). Further, in some examples, after determining one or more charging curves of one or more energy storage devices, the charger control circuitry 144 conducts one or more re-calculations and/or modifications of one or more of the one or more charging curves based on additions, changes, and/or modifications to information used in the initial manipulation and/or calculations to determine the one or more charging curves. For example, a re-determination of one or more of the one or more charging curves may be triggered by modification (e.g., by any, some, or all of the control circuitries 114, 124, 144, one or more other control circuitries, the user interface 115, one or more of the user interfaces 319, one or more other user interfaces, etc.) of and/or a receipt (e.g., via an input signal received by the charger communications circuitry 146, by the charger control circuitry 144 identifying a change in data in the memory storage device 314 and/or in data accessed by the charger communications circuitry 146, etc.) of a change in usage information of one or more of the one or more energy storage devices, scheduling information of one or more of the one or more energy storage devices and/or of one or more other devices or systems (e.g., either or both of the welding-type power supplies 110A, 110B), receiving new and/or modified charging information of one or more of the one or more energy storage devices and/or of one or more power sources for charging the one or more energy storage devices (e.g., the hybrid welding-type power supply 110A, the utility power source 130, and/or one or more other power sources), a change in a quantity of power sources for charging the one or more energy storage devices, a change in availability of one or more power sources for charging the one or more energy storage devices, a change in type of one or more power sources for charging the one or more energy storage devices, a change in quantity of the one or more energy storage devices and/or of one or more alternative energy storage devices, a change in availability of the one or more energy storage devices and/or of one or more alternative energy storage devices, and/or one or more other changes, additions, and/or modifications to data that the charger control circuitry 144 may use in determining one or more charging curves. Accordingly, the charger control circuitry 144 may determine one or more charging curves of one or more energy storage devices with usage of more data points and/or types than could conceivably be used for calculations and/or modifications performed by a human mind and/or with a pencil and paper, in larger volumes than could conceivably be performed by the human mind and/or with a pencil and paper, and/or at more frequent time intervals than could conceivably be performed by the human mind and/or with a pencil and paper. Further, the charger control circuitry 144 may provide superior determination of one or more charging curves of one or more energy storage devices than possible by human workers, thereby, e.g., improving reliability of timely energy storage device availability for welding operations (e.g., by determining charging curves that more accurately charge one or more energy storage devices to a target SoC by an end time of an available charging period), maintaining, increasing, maximizing, and/or limiting a reduction of uniformity of SoH across a plurality of energy storage devices (e.g., by charging energy storage devices having worse SoH at slower rates), decreasing a reduction in SoH to one or more energy storage devices caused by charging (e.g., by charging the one or more energy storage devices more slowly), decreasing power consumption involved in the charging of the one or more energy storage devices (e.g., by charging the one or more energy storage devices more slowly), and/or reducing inefficiencies caused by human error, charging schedules, unplanned welding operations or other uses of the one or more energy storage devices.

At block 408, the charger control circuitry 144 controls the charger power conversion circuitry 142 to charge the battery 120 using the charging curve (e.g., charging the battery 120 according to charging rates and/or charging powers at one or more respective associated times and/or time periods, according to values of the charging curve). In some examples, the charger control circuitry 144 additionally and/or alternatively controls one or more other power conversion circuitries (e.g., the power input 111, the bidirectional DC-DC converter 117A, the power supply power conversion circuitry 112, power conversion circuitry of the utility power source 130, etc.) to charge the battery 120 using the charging curve. In some examples, the charger power conversion circuitry 142 controls one or more other power conversion circuitries (e.g., the power input 111) to charge the battery 120 using the charging curve by using the charger communications circuitry 146 to send a control signal including the charging curve (e.g., received by the power supply control circuitry 114 using the power supply communications circuitry 116). In some examples, the charger control circuitry 144 controls the charger power conversion circuitry 142 and/or one or more other power conversion circuitries to charge the battery 120 and one or more other energy storage devices (e.g., one or more of the energy storage devices 320A, 320B, 320C, 320D) using one charging curve (e.g., the same charging curve for each energy storage device). In some examples, the charger control circuitry 144 controls the charger power conversion circuitry 142 and/or one or more other power conversion circuitries to charge the battery 120 and one or more other energy storage devices (e.g., one or more of the energy storage devices 320A, 320B, 320C, 320D) using a plurality of charging curves (e.g., one or more respective charging curves for one or more of the energy storage devices).

While the present method, apparatus, and/or system has been described with reference to certain implementations, it will be understood by those skilled in the art that various changes, modifications, and variations may be made to the present disclosure and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, re-arranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. A battery charging system, comprising:
   power conversion circuitry configured to convert input power to charging power;
   communications circuitry configured to access usage information from a management system of an energy storage device, the usage information comprising a plurality of charging periods and a plurality of discharging periods of the energy storage device; and
   control circuitry configured to:
      predict an available charging period based on the usage information;
      determine a target state of charge of the energy storage device based on the usage information;
      determine a charging curve configured to charge the energy storage device to the target state of charge by an end time of the available charging period; and
      control the power conversion circuitry to charge the energy storage device using the charging curve.
Clause 2. The battery charging system as defined in clause 1, wherein the predicting of the available charging period is further based on a plurality of disuse periods of the energy storage device.
Clause 3. The battery charging system as defined in clause 1, wherein the control circuitry is configured to determine the target state of charge of the energy storage device based on one or more discharging periods of the plurality of discharging periods.
Clause 4. The battery charging system as defined in clause 3, wherein:
   the usage information further comprises one or more duty cycles of the energy storage device;
   each of the one or more duty cycles are associated with one or more discharging periods of the plurality of discharging periods; and
   the determining of the target state of charge is further based on the one or more duty cycles.
Clause 5. The battery charging system as defined in clause 3, wherein:
   the usage information further comprises one or more average discharge rates of the energy storage device;
   each of the one or more average discharge rates are associated with one or more discharging periods of the plurality of discharging periods; and
   the determining of the target state of charge is further based on the one or more average discharge rates.
Clause 6. The battery charging system as defined in clause 3, wherein:
   the usage information further comprises one or more peak discharge rates of the energy storage device;
   each of the one or more peak discharge rates are associated with one or more discharging periods of the plurality of discharging periods; and
   the determining of the target state of charge is further based on the one or more peak discharge rates.
Clause 7. The battery charging system as defined in clause 3, wherein:
   the usage information further comprises one or more discharging quantities of the energy storage device;
   each of the one or more discharging quantities are associated with one or more discharging periods of the plurality of discharging periods; and
   the determining of the target state of charge is further based on the discharging quantity of the plurality of discharging periods.
Clause 8. The battery charging system as defined in clause 3, wherein:
   the usage information further comprises one or more quantities of total energy discharges of the energy storage device; and
   the determining of the target state of charge is further based on the one or more total energy discharges.
Clause 9. The battery charging system as defined in clause 3, wherein:
   the usage information further comprises a discharging frequency of the plurality of discharging periods of the energy storage device; and
   the determining of the target state of charge is further based on the discharging frequency.
Clause 10. The battery charging system as defined in clause 3, wherein:
   the usage information further comprises one or more load characteristics of the energy storage device;
   each of the one or more load characteristics are associated with one or more discharging periods of the plurality of discharging periods; and
   the determining of the target state of charge is further based on the one or more load characteristics.
Clause 11. The battery charging system as defined in clause 3, wherein the control circuitry is further configured to:
   predict a predicted duration for a subsequent discharge period; and
   determine the target state of charge based on the predicted duration.
Clause 12. The battery charging system as defined in clause 3, wherein the control circuitry is further configured to:
   predict a predicted energy amount for a subsequent discharge period; and
   determine the target state of charge based on the predicted energy amount.
Clause 13. The battery charging system as defined in clause 1, wherein the determining of the charging curve comprises selecting the charging curve from a plurality of potential charging curves.
Clause 14. The battery charging system as defined in clause 13, wherein:
   each potential charging curve of the plurality of potential charging curves is associated with one or more respective durations; and
   the selecting of the charging curve is based on an available duration of the available charging period.
Clause 15. The battery charging system as defined in clause 1, wherein the control circuitry is configured to calculate the charging curve based on the available charging period, the target state of charge, and the usage information.
Clause 16. The battery charging system as defined in clause 1, wherein:
   the energy storage device is a first energy storage device of a plurality of energy storage devices; and
   the control circuitry is configured to predict the available charging period based on state of health information of the first energy storage device and state of health information of one or more alternative energy storage devices of the plurality of energy storage devices.
Clause 17. The battery charging system as defined in clause 1, wherein:
   the energy storage device is a first energy storage device of a plurality of energy storage devices; and
   the predicting of the available charging period is further based on an availability of one or more alternative energy storage devices of the plurality of energy storage devices.
Clause 18. The battery charging system as defined in clause 17, wherein:
   the usage information of the first energy storage device is first usage information; and
   the predicting of the available charging period is based on the first usage information and on second usage information of each of one or more available alternative energy storage devices of the one or more alternative energy storage devices.
Clause 19. The battery charging system as defined in clause 1, wherein the usage information comprises timestamps defining one or more charging periods of the plurality of charging periods.
Clause 20. The battery charging system as defined in clause 1, wherein the usage information comprises timestamps defining one or more discharging periods of the plurality of discharging periods.

## Claims

1. A battery charging system, comprising:
power conversion circuitry configured to convert input power to charging power;
communications circuitry configured to access usage information from a management system of an energy storage device, the usage information comprising a plurality of charging periods and a plurality of discharging periods of the energy storage device; and
control circuitry configured to:
predict an available charging period based on the usage information;
determine a target state of charge of the energy storage device based on the usage information;
determine a charging curve configured to charge the energy storage device to the target state of charge by an end time of the available charging period; and
control the power conversion circuitry to charge the energy storage device using the charging curve.

2. The battery charging system as defined in claim 1, wherein the predicting of the available charging period is further based on a plurality of disuse periods of the energy storage device.

3. The battery charging system as defined in claim 1, wherein the control circuitry is configured to determine the target state of charge of the energy storage device based on one or more discharging periods of the plurality of discharging periods.

4. The battery charging system as defined in claim 3, wherein:
the usage information further comprises one or more duty cycles of the energy storage device;
each of the one or more duty cycles are associated with one or more discharging periods of the plurality of discharging periods; and
the determining of the target state of charge is further based on the one or more duty cycles, or
wherein:
the usage information further comprises one or more average discharge rates of the energy storage device;
each of the one or more average discharge rates are associated with one or more discharging periods of the plurality of discharging periods; and
the determining of the target state of charge is further based on the one or more average discharge rates, or
wherein:
the usage information further comprises one or more peak discharge rates of the energy storage device;
each of the one or more peak discharge rates are associated with one or more discharging periods of the plurality of discharging periods; and
the determining of the target state of charge is further based on the one or more peak discharge rates, or
wherein:
the usage information further comprises one or more discharging quantities of the energy storage device;
each of the one or more discharging quantities are associated with one or more discharging periods of the plurality of discharging periods; and
the determining of the target state of charge is further based on the discharging quantity of the plurality of discharging periods, or
wherein:
the usage information further comprises one or more quantities of total energy discharges of the energy storage device; and
the determining of the target state of charge is further based on the one or more total energy discharges, or
wherein:
the usage information further comprises a discharging frequency of the plurality of discharging periods of the energy storage device; and
the determining of the target state of charge is further based on the discharging frequency.

5. The battery charging system as defined in claim 3, wherein:
the usage information further comprises one or more load characteristics of the energy storage device;
each of the one or more load characteristics are associated with one or more discharging periods of the plurality of discharging periods; and
the determining of the target state of charge is further based on the one or more load characteristics.

6. The battery charging system as defined in claim 3, wherein the control circuitry is further configured to:
predict a predicted duration for a subsequent discharge period; and
determine the target state of charge based on the predicted duration.

7. The battery charging system as defined in claim 3, wherein the control circuitry is further configured to:
predict a predicted energy amount for a subsequent discharge period; and
determine the target state of charge based on the predicted energy amount.

8. The battery charging system as defined in claim 1, wherein the determining of the charging curve comprises selecting the charging curve from a plurality of potential charging curves.

9. The battery charging system as defined in claim 8, wherein:
each potential charging curve of the plurality of potential charging curves is associated with one or more respective durations; and
the selecting of the charging curve is based on an available duration of the available charging period.

10. The battery charging system as defined in claim 1, wherein the control circuitry is configured to calculate the charging curve based on the available charging period, the target state of charge, and the usage information.

11. The battery charging system as defined in claim 1, wherein:
the energy storage device is a first energy storage device of a plurality of energy storage devices; and
the control circuitry is configured to predict the available charging period based on state of health information of the first energy storage device and state of health information of one or more alternative energy storage devices of the plurality of energy storage devices.

12. The battery charging system as defined in claim 1, wherein:
the energy storage device is a first energy storage device of a plurality of energy storage devices; and
the predicting of the available charging period is further based on an availability of one or more alternative energy storage devices of the plurality of energy storage devices.

13. The battery charging system as defined in claim 12, wherein:
the usage information of the first energy storage device is first usage information; and
the predicting of the available charging period is based on the first usage information and on second usage information of each of one or more available alternative energy storage devices of the one or more alternative energy storage devices.

14. The battery charging system as defined in claim 1, wherein the usage information comprises timestamps defining one or more charging periods of the plurality of charging periods.

15. The battery charging system as defined in claim 1, wherein the usage information comprises timestamps defining one or more discharging periods of the plurality of discharging periods.
